# EUROPEAN PATENT APPLICATION

(11) **EP 4 257 538 A1**
(43) Date of publication of application: **11.10.2023**
(21) Application number: 20964336.0
(22) Date of filing: 14.12.2020
(51) Int. Cl.: B67D 1/08, A47J 31/00

(54) **COFFEE BEVERAGE PRODUCTION DEVICE**

(30) Priority: 03.12.2020 JP 2020201275
(71) Applicant: Daito Giken, Inc., Taito-ku, Tokyo, 110-0015 (JP)
(72) Inventor: KASHIMA, Masaki, Tokyo 104-0031 (JP); AIZAKI, Kuniaki, Tokyo 104-0031 (JP)
(74) Representative: dompatent von Kreisler Selting Werner - Partnerschaft von Patent- und Rechtsanwälten mbB
(86) International application number: PCT/JP2020/046463
(87) International publication number: WO 2022/118485

(57) **Abstract**

[Problem to be solved] Provided is a coffee beverage production device capable of deepening understanding of a product and conveying attractiveness of the product during production of a coffee beverage.

[Solution] A coffee beverage production device, including: a display device capable of displaying data selected from a data group including at least one of moving image data and image data during production of a coffee beverage, in which the data group includes first data and second data, and the first data is easier to be displayed than the second data.

## Description

### Technical Field

The present invention relates to a coffee beverage production device.

### Background Art

Various coffee extraction devices are known (for example, Patent Literature 1).

### Citation List

### Patent Literature

Patent Literature 1: Japanese Patent Laid-Open No. 2019-30433

### Summary of Invention

### Technical Problem

It is tedious to wait for a beverage production device producing a coffee beverage.

An object of the present invention to provide a coffee beverage production device capable of deepening understanding of a product and conveying attractiveness of the product during production of a coffee beverage.

### Solution to Problem

An extraction device for solving the above problem is
a coffee beverage production device including a display device capable of displaying data selected from a data group including at least one of moving image data and image data during production of a coffee beverage, in which
the data group includes first data and second data, and
the first data is easier to be displayed than the second data.

The coffee beverage production device can be set to deepen understanding of a product, and to make more people see data for conveying attractiveness of the product.

In the above coffee beverage production device,
the display device may be capable of switching data being displayed to other data in the data group according to an operation by a user during the production of the coffee beverage.

In this coffee beverage production device, the user can switch display contents, so that the user is less likely to get bored during the production of the coffee beverage.

In the above coffee beverage production device,
the display device may notify for prompting to switch to the first data while displaying the second data.

In this coffee beverage production device, the first data can be easily displayed by the operation by the user.

In the above coffee beverage production device,
the display device may switch from a state of displaying the first data to a state of displaying the second data during the production of the coffee beverage, and in a case where the display device displays the second data when the production of the coffee beverage is completed, the display device may display the first data at a start of production of the next coffee beverage.

In this coffee beverage production device, the first data can be displayed more frequently.

In the above coffee beverage production device,
one or more pieces of data in the data group may be set as the first data.

Since this coffee beverage production device can use various data as the first data, it is possible to convey more information about the product.

In the above coffee beverage production device,
a display time of each piece of data in the data group may be capable of being stored.

Useful information can be obtained from this coffee beverage production device when studying a sales strategy for the product.

In the above coffee beverage production device,
information on the data being displayed on the display device may be sent to an external device.

From this coffee beverage production device, useful information can be collected when studying a sales strategy for the product.

In the above coffee beverage production device,
the data group may include data for explaining a production step of the coffee beverage.

With this coffee beverage production device, it is possible to deepen understanding of the production step of the coffee beverage.

In the above coffee beverage production device,
the data group may include data for explaining a creator of a recipe of the coffee beverage.

With this coffee beverage production device, it is possible to deepen understanding of the creator of the recipe.

In the above coffee beverage production device,
the data group may include data for explaining coffee beans used in the coffee beverage.

With this coffee beverage production device, it is possible to deepen understanding of the coffee beans.

In the above coffee beverage production device,
the display device may be capable of switching data being displayed to other data in the data group according to a progress of a production step of the coffee beverage.

In this coffee beverage production device, it is possible to use data suitable for the production step and the like.

There may be a coffee beverage production system including an external device capable of communicating with the coffee beverage production device.

### Advantageous Effects of Invention

The present invention can provide a coffee beverage production device capable of deepening understanding of a product and conveying attractiveness of the product during production of a coffee beverage.

### Brief Description of Drawings

[Figure 1] Figure 1 is an external view of a beverage production device.
[Figure 2] Figure 2 is a partial front view of the beverage production device in Figure 1.
[Figure 3] Figure 3 is a schematic diagram of functions of the beverage production device in Figure 1.
[Figure 4] Figure 4 is a partially cutaway perspective view of a separation device.
[Figure 5] Figure 5 is a perspective view of a drive unit and an extraction container.
[Figure 6] Figure 6 is a diagram showing a closed state and an open state of the extraction container in Figure 5.
[Figure 7] Figure 7 is a front view showing a configuration of a part of an upper unit and a lower unit.
[Figure 8] Figure 8 is a longitudinal cross-sectional view of Figure 7.
[Figure 9] Figure 9 is a schematic diagram of a middle unit.
[Figure 10] Figure 10 is a block diagram of a control device of the beverage production device in Figure 1.
[Figure 11] In Figure 11, (A) and (B) are flowcharts showing a control example executed by the control device.
[Figure 12] Figure 12 is a flowchart showing display process during production of a coffee beverage.
[Figure 13] Figure 13 is a flowchart showing display process during the production of the coffee beverage.
[Figure 14] Figure 14 is a diagram showing screens displayed before a start of a production step of the coffee beverage.
[Figure 15] Figure 15 is a diagram showing screens displayed during the production of the coffee beverage.
[Figure 16] Figure 16 is a diagram showing screens displayed during the production of the coffee beverage.
[Figure 17] Figure 17 is a diagram showing screens displayed during the production of the coffee beverage.
[Figure 18] Figure 18 is a diagram showing a screen displayed during the production of the coffee beverage and a reception screen for image selection.
[Figure 19] Figure 19 is a diagram showing examples of a table showing an image during production pattern.
[Figure 20] Figure 20 is a diagram showing examples of display timings of specific data during the production of the coffee beverage.
[Figure 21] Figure 21 is a diagram showing an example of storage of a display time and the number of times of switching of data displayed during the production of the coffee beverage.
[Figure 22] Figure 22 is a diagram showing an example of guidance display for guiding to a state in which specific data is displayed.

### Description of Embodiments

Hereinafter, an embodiment will be described with reference to the attached drawings. It should be noted that the following embodiment does not limit the invention according to the scope of claims, and not all combinations of features described in the embodiment are essential to the invention. Two or more of the features described in the embodiment may be combined freely. The same or similar configurations are denoted by the same reference numerals, and redundant explanations are omitted.

### <1. Overview of Beverage Production Device>

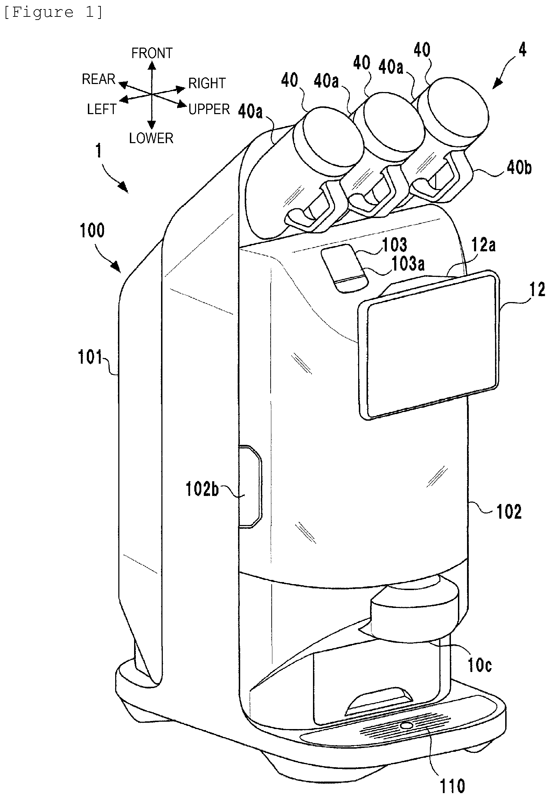

Figure 1 is an external view of a beverage production device 1. The beverage production device 1 of the present embodiment is a device for automatically producing a coffee beverage from roasted coffee beans and a liquid (here, water), and can produce a coffee beverage for one cup per one production operation. The roasted coffee beans as a raw material can be accommodated in canisters 40. A cup placing portion 110 is provided in a lower portion of the beverage production device 1, and a produced coffee beverage is poured into a cup from a pouring portion 10c.

The beverage production device 1 includes a housing 100 that forms an exterior of the beverage production device 1 and encloses an internal mechanism. The housing 100 is roughly divided into a main body portion 101 and a cover portion 102 that covers a part of a front surface and a part of a side surface of the beverage production device 1. The cover portion 102 is provided with an information display device 12. The information display device 12 of the present embodiment is a touch panel type display, and is capable of receiving an input from an administrator of the device or a beverage consumer in addition to displaying various types of information. The information display device 12 is attached to the cover portion 102 via a moving mechanism 12a, and can be moved in a predetermined range in an upper-lower direction by the moving mechanism 12a.

The cover portion 102 is provided with a bean inlet 103 and a door 103a that opens and closes the bean inlet 103. Roasted coffee beans different from the roasted coffee beans accommodated in the canisters 40 can be input to the bean inlet 103 by opening the opening and closing door 103. As a result, it is possible to provide a cup of special beverage to a beverage consumer.

The cover portion 102 of the present embodiment is made of a translucent material such as acrylic or glass, and constitutes a transparent cover whose entire body is a transmissive portion. Therefore, an inner mechanism covered by the cover portion 102 can be visually recognized from the outside. In the present embodiment, a part of a production portion for producing a coffee beverage can be visually recognized through the cover portion 102. The main body portion 101 of the present embodiment is entirely a non-transmissive portion, and it is difficult to visually recognize the inside of the main body portion 101 from the outside.

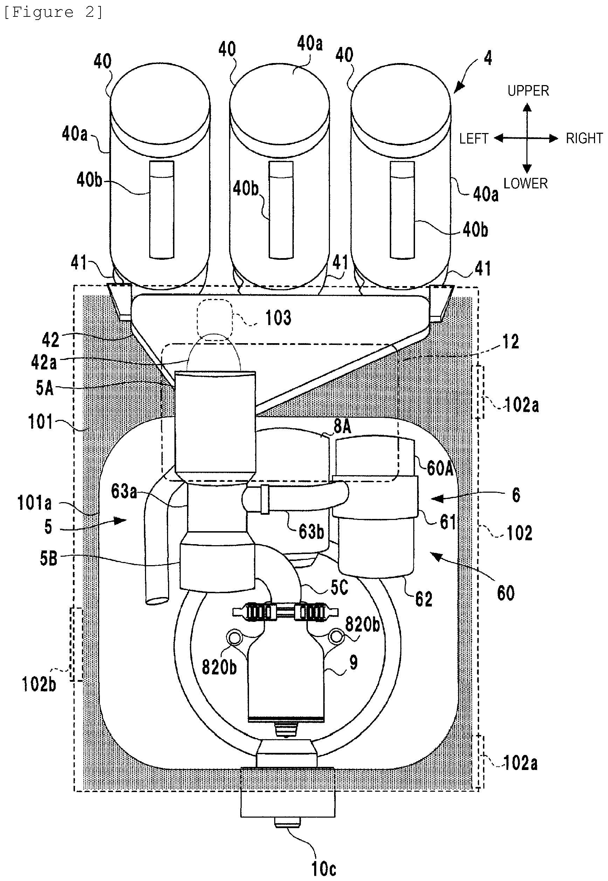

Figure 2 is a partial front view of the beverage production device 1, and is a diagram showing a part of the production portion that can be visually recognized by a user in a front view of the beverage production device 1. The cover portion 102 and the information display device 12 are shown by imaginary lines.

The housing 100 in a front portion of the beverage production device 1 has a double structure of the main body portion 101 and the cover portion 102 on an outer side (front side) of the main body portion 101. A part of mechanisms of the production portion are disposed between the main body portion 101 and the cover portion 102 in a front-rear direction, and can be visually recognized by a user through the cover portion 102.

A part of the mechanisms of the production portion that can be visually recognized by a user through the cover portion 102 in the present embodiment include a collective conveying portion 42, grinders 5A and 5B, a separation device 6, an extraction container 9, and the like. A rectangular concave portion 101a recessed in a rear side is formed in a front portion of the main body portion 101, and the extraction container 9 and the like are positioned in a rear side of the concave portion 101a.

Since these mechanisms can be visually recognized from the outside through the cover portion 102, an administrator may easily inspect or check the operation. In addition, a beverage consumer may enjoy a process of producing a coffee beverage.

A right end portion of the cover portion 102 is supported by the main body portion 101 via a hinge 102a so as to be freely opened and closed horizontally. An engaging portion 102b is provided at a left end portion of the cover portion 102 to maintain the main body portion 101 and the cover portion 102 in a closed state. The engaging portion 102b is, for example, a combination of a magnet and iron. By opening the cover portion 102, an administrator can inspect a part of the production portion described above on an inner side of the cover portion 102.

Note that in the present embodiment, the cover portion 102 is of a horizontal opening type, but may be of a vertical opening type or a slide type. In addition, the cover portion 102 may be configured such that the cover portion 102 cannot be opened or closed.

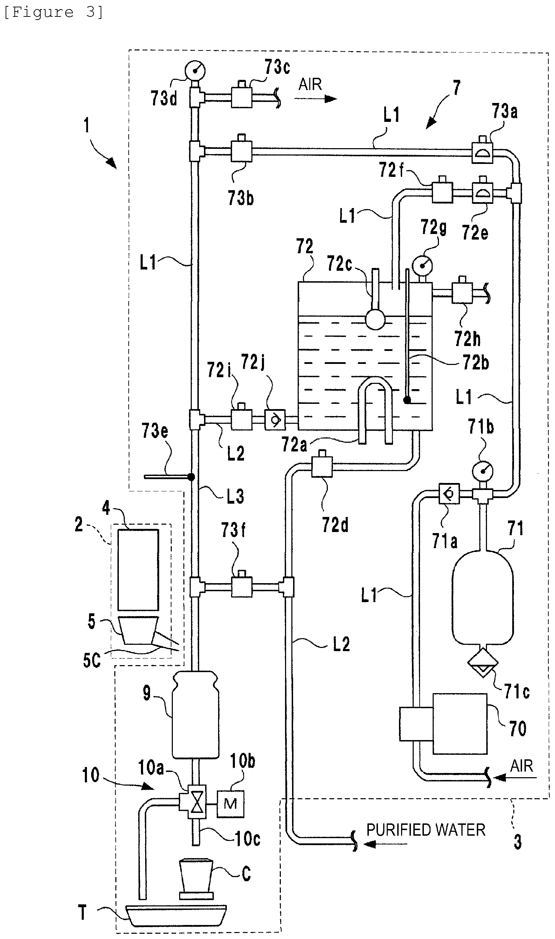

Figure 3 is a schematic diagram of functions of the beverage production device 1. The beverage production device 1 includes a bean processing device 2 and an extraction device 3 as the production portion of a coffee beverage.

The bean processing device 2 produces ground beans from roasted coffee beans. The extraction device 3 extracts a coffee liquid from the ground beans supplied from the bean processing device 2. The extraction device 3 includes a fluid supply unit 7, a drive unit 8, which will be described later, the extraction container 9, and a switching unit 10. The ground beans supplied from the bean processing device 2 are put into the extraction container 9. The fluid supply unit 7 introduces hot water into the extraction container 9. A coffee liquid is extracted from the ground beans in the extraction container 9. The hot water containing the extracted coffee liquid is dispensed into a cup C as a coffee beverage through the switching unit 10.

### <2. Fluid Supply Unit and Switching Unit>

Configurations of the fluid supply unit 7 and the switching unit 10 will be described with reference to Figure 3. First, the fluid supply unit 7 will be described. The fluid supply unit 7 supplies the hot water to the extraction container 9 and controls an atmosphere pressure in the extraction container 9. In the present description, when the atmosphere pressure is indicated by a numeral, it means an absolute pressure unless otherwise specified, and a gauge pressure means an atmosphere pressure in which an atmospheric pressure is 0 atm. The atmospheric pressure refers to an atmospheric pressure around the extraction container 9 or an atmospheric pressure of the beverage production device 1. For example, when the beverage production device 1 is disposed at a point of 0 meter above sea level, the atmospheric pressure is a standard atmosphere (1013.25 hPa) at 0 meter above sea level of the international standard atmosphere ([abbreviation] ISA) established in 1976 by the international civil aviation organization ([abbreviation] ICAO]).

The fluid supply unit 7 includes pipes L1 to L3. The pipe L1 is a pipe through which air flows, and the pipe L2 is a pipe through which water flows. The pipe L3 is a pipe through which both air and water can flow.

The fluid supply unit 7 includes a compressor 70 as a pressure source. The compressor 70 compresses and sends out the air. The compressor 70 is driven by, for example, a motor (not shown) as a drive source. The compressed air sent out from the compressor 70 is supplied to a reserve tank (accumulator) 71 via a check valve 71a. An atmosphere pressure in the reserve tank 71 is monitored by a pressure sensor 71b, and the compressor 70 is driven such that the atmosphere pressure is maintained at a predetermined atmosphere pressure (7 atm (6 atm in gauge pressure) in the present embodiment). A drain 71c for draining water is provided in the reserve tank 71, and water generated by the compression of air can be drained.

Hot water (water) constituting a coffee beverage is stored in a water tank 72. The water tank 72 is provided with a heater 72a for heating the water in the water tank 72 and a temperature sensor 72b for measuring a temperature of the water. The heater 72a maintains a temperature of the accumulated hot water at a predetermined temperature (120°C in the present embodiment) based on a detection result of the temperature sensor 72b. For example, the heater 72a is turned on when the temperature of the hot water is 118°C, and is turned off when the temperature of the hot water is 120°C.

The water tank 72 is also provided with a water level sensor 72c. The water level sensor 72c detects a water level of the hot water in the water tank 72. When the water level sensor 72c detects that the water level is lower than a predetermined water level, water is supplied to the water tank 72. In the present embodiment, water is supplied via a water purifier (not shown). An electromagnetic valve 72d is provided in the middle of the pipe L2 from the water purifier, and when a decrease in the water level is detected by the water level sensor 72c, the electromagnetic valve 72d is opened to supply water, and when the water level reaches a predetermined water level, the electromagnetic valve 72d is closed to cut off the supply of water. In this way, the hot water in the water tank 72 is maintained at a constant water level. The water may be supplied to the water tank 72 every time the hot water used for producing one coffee beverage is discharged.

The water tank 72 is also provided with a pressure sensor 72g. The pressure sensor 72g detects an atmospheric pressure in the water tank 72. The atmosphere pressure in the reserve tank 71 is supplied to the water tank 72 via a pressure regulating valve 72e and an electromagnetic valve 72f. The pressure regulating valve 72e reduces the atmosphere pressure supplied from the reserve tank 71 to a predetermined atmosphere pressure. In the present embodiment, the atmosphere pressure is reduced to 3 atm (2 atm in gauge pressure). The electromagnetic valve 72f switches between supplying to the water tank 72 and cutting off the atmosphere pressure regulated by the pressure regulating valve 72e. The electromagnetic valve 72f is controlled to open and close so that the atmosphere pressure in the water tank 72 is maintained at 3 atm except when the water is supplied to the water tank 72. When the water is supplied to the water tank 72, the atmosphere pressure in the water tank 72 is reduced to a pressure lower than a water pressure of the tap water (for example, less than 2.5 atm) by an electromagnetic valve 72h so that the water is smoothly supplied to the water tank 72 by the water pressure of the water. The electromagnetic valve 72h switches whether to open the water tank 72 to the atmosphere, and opens the water tank 72 to the atmosphere during pressure reduction. In addition, the electromagnetic valve 72h opens the water tank 72 to the atmosphere when the atmosphere pressure in the water tank 72 exceeds 3 atm and maintains the inside of the water tank 72 at 3 atm, except when the water is supplied to the water tank 72.

The hot water in the water tank 72 is supplied to the extraction container 9 via a check valve 72j, an electromagnetic valve 72i, and the pipe L3. The hot water is supplied to the extraction container 9 by opening the electromagnetic valve 72i, and the supply of the hot water is cut off by closing the electromagnetic valve 72i. An amount of the hot water to be supplied to the extraction container 9 can be controlled by an open time of the electromagnetic valve 72i. However, the opening and closing of the electromagnetic valve 72i may be controlled by measuring the supply amount. A temperature sensor 73e for measuring a temperature of the hot water is provided in the pipe L3, and the temperature of the hot water supplied to the extraction container 9 is monitored.

The atmospheric pressure of the reserve tank 71 is also supplied to the extraction container 9 via a pressure regulating valve 73a and an electromagnetic valve 73b. The pressure regulating valve 73a reduces the atmospheric pressure supplied from the reserve tank 71 to a predetermined atmospheric pressure. In the present embodiment, the atmosphere pressure can be reduced to 5 atm (4 atm in gauge pressure). The electromagnetic valve 73b switches between supplying to the extraction container 9 and cutting off the atmospheric pressure regulated by the pressure regulating valve 73a. The atmospheric pressure in the extraction container 9 is detected by a pressure sensor 73d. When the extraction container 9 is pressurized, the electromagnetic valve 73b is opened based on a detection result of the pressure sensor 73d, and the inside of the extraction container 9 is pressurized to a predetermined atmospheric pressure (in the present embodiment, a maximum of 5 atm (4 atm in gauge pressure)). The atmospheric pressure in the extraction container 9 can be reduced by an electromagnetic valve 73c. The electromagnetic valve 73c switches whether to open the extraction container 9 to the atmosphere, and opens the extraction container 9 to the atmosphere when the pressure is abnormal (for example, when the inside of the extraction container 9 exceeds 5 atm).

In the present embodiment, when the production of one coffee beverage is completed, the inside of the extraction container 9 is washed with water. An electromagnetic valve 73f is opened at the time of washing, and supplies the water to the extraction container 9.

Next, the switching unit 10 will be described. The switching unit 10 is a unit that switches a feed-out destination of a liquid fed out from the extraction container 9 to either the pouring portion 10c or a waste tank T. The switching unit 10 includes a switching valve 10a and a motor 10b that drives the switching valve 10a. When a coffee beverage in the extraction container 9 is being fed out, the switching valve 10a switches a flow path to the pouring portion 10c. The coffee beverage is poured into the cup C from the pouring portion 10c. When a waste liquid (water) and residue (ground beans) at the time of washing are to be discharged, the flow path is switched to the waste tank T. In the present embodiment, the switching valve 10a is a three-port ball valve. Since the residue passes through the switching valve 10a at the time of washing, the switching valve 10a is preferably a ball valve, and the motor 10b switches the flow path by rotating a rotation shaft thereof.

### <3. Bean Processing Device>

The bean processing device 2 will be described with reference to Figures 1 and 2. The bean processing device 2 includes a reservoir device 4 and a pulverizing device 5.

### <3-1. Reservoir Device>

The reservoir device 4 includes the plurality of canisters 40 in which roasted coffee beans are accommodated. In the present embodiment, three canisters 40 are provided. Each of the canisters 40 includes a cylindrical main body 40a for accommodating roasted coffee beans, and a handle 40b provided on the main body 40a, and is configured to be detachably attached to the beverage production device 1.

Each of the canisters 40 may accommodate different types of roasted coffee beans, and may be configured such that a type of roasted coffee beans used for producing a coffee beverage can be selected according to an operation input to the information display device 12. The roasted coffee beans of different types are, for example, roasted coffee beans of different coffee bean varieties. The roasted coffee beans of different types are coffee beans of the same type, but may be roasted coffee beans of different degrees of roasting. The roasted coffee beans of different types may be roasted coffee beans of different varieties and degrees of roasting. In addition, roasted coffee beans in which roasted coffee beans of a plurality of types and varieties are mixed may be accommodated in at least one of the three canisters 40. In this case, roasted coffee beans of each variety may have the same degree of roasting.

Although a plurality of canisters 40 are provided in the present embodiment, only one canister 40 may be provided. When a plurality of canisters 40 are provided, roasted coffee beans of the same type may be accommodated in all or a plurality of canisters 40.

Each of the canisters 40 is detachably attached to a weighing conveying device 41. The weighing conveying device 41 is, for example, an electric screw conveyor, and automatically measures a predetermined amount of roasted coffee beans accommodated in the canister 40 and feeds out the roasted coffee beans to a downstream side.

Each weighing conveying device 41 discharges the roasted coffee beans to the collective conveying portion 42 on the downstream side. The collective conveying portion 42 is formed of a hollow member, and forms a conveying passage for roasted coffee beans from each of the conveyors 41 to the pulverizing device 5 (in particular, the grinder 5A). The roasted coffee beans discharged from each weighing conveying device 41 move inside the collective conveying portion 42 by an own weight thereof, and flow down to the pulverizing device 5.

A guide portion 42a is formed in the collective conveying portion 42 at a position corresponding to the bean inlet 103. The guide portion 42a forms a passage for guiding roasted coffee beans put from the bean inlet 103 to the pulverizing device 5 (in particular, the grinder 5A). As a result, in addition to the roasted coffee beans accommodated in the canister 40, a coffee beverage made from roasted coffee beans put from the bean inlet 103 can be produced.

### <3-2. Pulverizing Device>

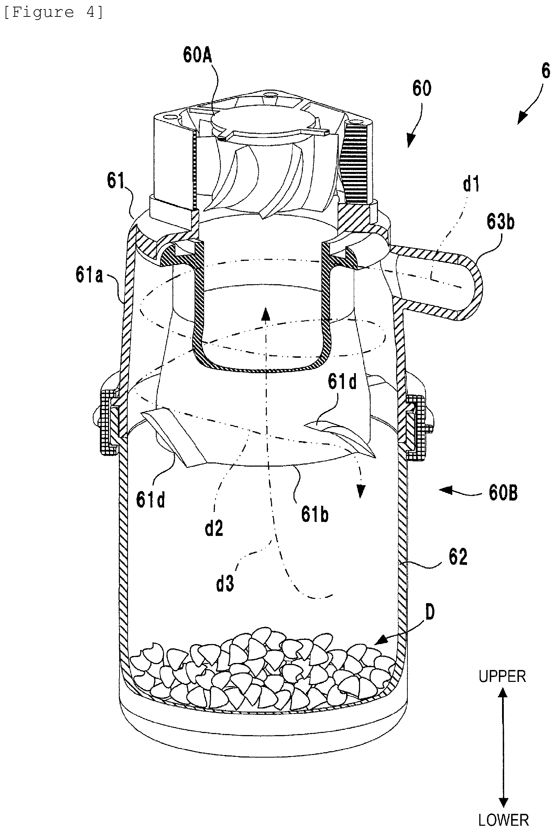

The pulverizing device 5 will be described with reference to Figures 2 and 4. Figure 4 is a partially cutaway perspective view of the separation device 6. The pulverizing device 5 includes the grinders 5A and 5B, and the separation device 6. The grinders 5A and 5B are mechanisms for grinding roasted coffee beans supplied from the reservoir device 4. The roasted coffee beans supplied from the reservoir device 4 are ground by the grinder 5A, then further ground by the grinder 5B into powder, and are put into the extraction container 9 from a discharge pipe 5C.

The grinders 5A and 5B have different particle sizes for grinding beans. The grinder 5A is a grinder for coarse grinding, and the grinder 5B is a grinder for fine grinding. The grinders 5A and 5B are electric grinders, and include a motor as a drive source, a rotary blade driven by the motor, and the like. A size (particle size) of roasted coffee beans to be ground can be changed by changing the number of rotations of the rotary blade.

The separation device 6 is a mechanism for separating wastes from ground beans. The separation device 6 includes a passage portion 63a disposed between the grinder 5A and the grinder 5B. The passage portion 63a is a hollow body that forms a separation chamber through which ground beans falling freely from the grinder 5A pass. A passage portion 63b extending in a direction (in the present embodiment, a left-right direction) intersecting a passing direction (in the present embodiment, the upper-lower direction) of the ground beans is connected to the passage portion 63a, and a suction unit 60 is connected to the passage portion 63b. By the suction unit 60 suctioning the air in the passage portion 63a, lightweight objects such as chaff and fine powder are suctioned. As a result, the wastes can be separated from the ground beans.

The suction unit 60 is a mechanism of a centrifugal separation type. The suction unit 60 includes an air blowing unit 60A and a collection container 60B. The air blowing unit 60A in the present embodiment is a fan motor, and exhausts the air in the collection container 60B upward.

The collection container 60B includes the upper portion 61 and the lower portion 62 that are engaged with each other in a separable manner. The lower portion 62 has a bottomed cylindrical shape with an open upper side, and forms a space for accumulating wastes. The upper portion 61 constitutes a lid portion to be attached to an opening of the lower portion 62. The upper portion 61 includes a cylindrical outer circumferential wall 61a and an exhaust pipe 61b formed coaxially with the outer circumferential wall 61a. The air blowing unit 60A is fixed to the upper portion 61 above the exhaust pipe 61b so as to suction the air in the exhaust pipe 61b. The passage portion 63b is connected to the upper portion 61. The passage portion 63b is open to the side of the exhaust pipe 61b.

As the air blowing unit 60A is driven, air flows indicated by arrows d1 to d3 in Figure 4 are generated. Due to the air flows, the air containing wastes is suctioned into the collection container 60B from the passage portion 63a through the passage portion 63b. Since the passage portion 63b is open to the side of the exhaust pipe 61b, the air containing wastes swirls around the exhaust pipe 61b. A waste D in the air falls by a weight thereof and is collected in a part of the collection container 60B (accumulates on a bottom surface of the lower portion 62). The air is exhausted upward through the inside of the exhaust pipe 61b.

The plurality of fins 61d are integrally formed on a circumferential surface of the exhaust pipe 61b. The plurality of fins 61d are disposed in a circumferential direction of the exhaust pipe 61b. Each of the fins 61d is inclined obliquely with respect to an axial direction of the exhaust pipe 61b. The provision of such fins 61 facilitates the swirling of the air containing the waste D around the exhaust pipe 61b.

The lower portion 62 in the present embodiment is made of a translucent material such as acrylic or glass, and constitutes a transparent container whose entire body is a transmissive portion. The lower portion 62 is a portion covered by the cover portion 102 (Figure 2). An administrator or a beverage consumer can visually recognize the waste D accumulated in the lower portion 62 through the cover portion 102 and a circumferential wall of the lower portion 62. The administrator may easily determine the cleaning timing of the lower portion 62, and since the beverage consumer can visually recognize that the waste D is removed, the expectation of the quality of a coffee beverage being produced may be increased.

As described above, in the first embodiment, roasted coffee beans supplied from the reservoir device 4 are first coarsely ground by the grinder 5A, and wastes are separated by the separation device 6 when the coarsely ground beans pass through the passage portion 63a. The coarsely ground beans from which the waste is separated are finely ground by the grinder 5B. The waste to be separated by the separation device 6 are typically chaff and fine powder. These may impair the taste of a coffee beverage, and the quality of the coffee beverage can be improved by removing chaff and the like from ground beans.

Roasted coffee beans may be pulverized by one grinder (one-stage pulverizing). However, as in the present embodiment, performing two-stage pulverizing by the two grinders 5A and 5B makes it easier for ground beans to have a uniform particle size and makes it possible to have a constant degree of extraction of a coffee liquid. At the time of pulverization of beans, heat may be generated due to friction between a cutter and the beans. By performing two-stage pulverizing, heat generation due to friction during pulverizing can be prevented, and deterioration of ground beans (for example, deterioration of flavor) can be prevented.

Through steps of coarse grinding, separation of wastes, and fine grinding, it is possible to increase a mass difference between the wastes such as chaff and ground beans (necessary part) when the wastes are separated. This makes it possible to improve a separation efficiency of wastes, and to prevent ground beans (necessary part) from being separated as wastes. In addition, since a waste separation process using air aspiration is interposed between the coarse grinding and the fine grinding, heat generation of ground beans can be prevented by air cooling.

### <4. Drive Unit and Extraction Container>

### <4-1. Overview>

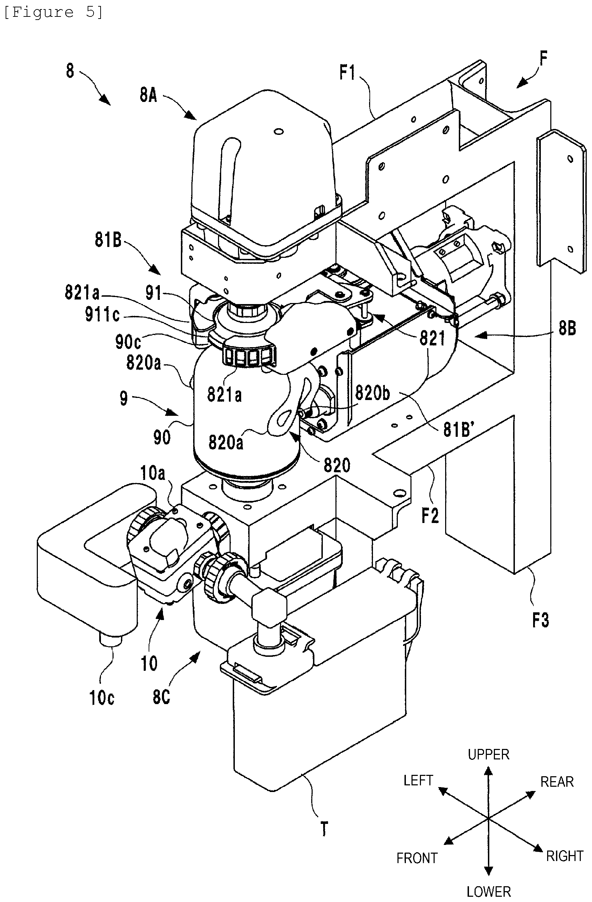

The drive unit 8 and the extraction container 9 of the extraction device 3 will be described with reference to Figure 5. Figure 5 is a perspective view of the drive unit 8 and the extraction container 9. Most of the drive unit 8 is enclosed by the main body portion 101.

The drive unit 8 is supported by a frame F. The frame F includes upper and lower beam portions F1 and F2 and a column portion F3 that supports the beam portions F1 and F2. The drive unit 8 is roughly divided into three units: an upper unit 8A, a middle unit 8B, and a lower unit 8C. The upper unit 8A is supported by the beam portion F1. The middle unit 8B is supported by the beam portion F1 and the column portion F3 between the beam portion F1 and the beam portion F2. The lower unit 8C is supported by the beam portion F2.

The extraction container 9 is a chamber including a container main body 90 and a lid unit 91. The extraction container 9 may be referred to as a chamber. The middle unit 8B includes an arm member 820 that detachably holds the container main body 90. The arm member 820 includes a holding member 820a and a pair of shaft members 820b spaced apart from each other in the left-right direction. The holding member 820a is an elastic member such as a resin formed in a C-shaped clip shape, and holds the container main body 90 by its elastic force. The holding member 820a holds left and right side portions of the container main body 90, and a front side of the container main body 90 is exposed. This makes it easier to visually recognize the inside of the container main body 90 in a front view.

The container main body 90 is attached to and detached from the holding member 820a by manual operation, and the container main body 90 is attached to the holding member 820a by pressing the container main body 90 rearward in the front-rear direction against the holding member 820a. The container main body 90 can be separated from the holding member 820a by pulling out the container main body 90 forward in the front-rear direction from the holding member 820a.

Each of the pair of shaft members 820b is a rod extending in the front-rear direction and is a member that supports the holding member 820a. Although the number of the shaft members 820b is two in the present embodiment, the number of the shaft members 820b may be one or three or more. The holding member 820a is fixed to front end portions of the pair of shaft members 820b. With a mechanism which will be described later, the pair of shaft members 820b are advanced and retracted in the front-rear direction, whereby the holding member 820a is advanced and retracted in the front-rear direction, and a moving operation of moving the container main body 90 in parallel in the front-rear direction can be performed. The middle unit 8B can also perform a pivoting operation of turning the extraction container 9 upside down, as will be described later.

### <4-2. Extraction Container>

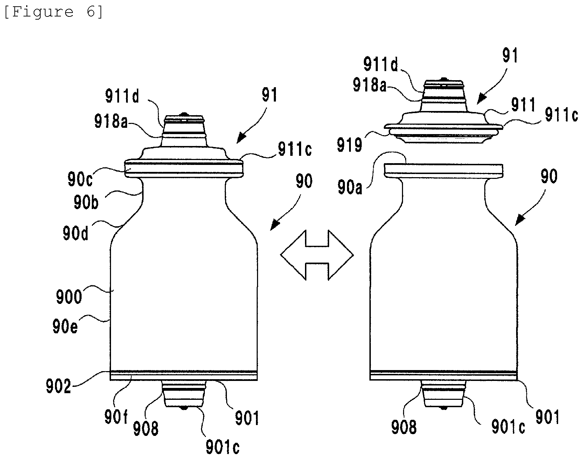

The extraction container 9 will be described with reference to Figure 6. Figure 6 is a diagram showing a closed state and an open state of the extraction container 9. As described above, the extraction container 9 is reversed in an up-down direction by the middle unit 8B. The extraction container 9 in Figure 6 shows a basic posture in which the lid unit 91 is positioned on an upper side. In the following description, when describing an upper-lower positional relation, the upper-lower positional relation means an upper-lower positional relation in the basic posture unless otherwise specified.

The container main body 90 is a bottomed container and has a bottle shape including a neck portion 90b, a shoulder portion 90d, a body portion 90e, and a bottom portion 90f. A flange portion 90c defining an opening 90a communicating with an internal space of the container main body 90 is formed at an end portion (an upper end portion of the container main body 90) of the neck portion 90b.

Both the neck portion 90b and the body portion 90e have a cylindrical shape. The shoulder portion 90d is a portion between the neck portion 90b and the body portion 90e, and has a tapered shape such that a cross-sectional area of an internal space thereof gradually decreases from the body portion 90e side toward the neck portion 90b side.

The lid unit 91 is a unit that opens and closes the opening 90a. The opening and closing operation (raising and lowering operation) of the lid unit 91 is performed by the upper unit 8A.

The container main body 90 includes a main body member 900 and a bottom member 901. The main body member 900 is a cylindrical member that forms the neck portion 90b, the shoulder portion 90d, and the body portion 90e and is open at the top and bottom. The bottom member 901 is a member that forms the bottom portion 90f, and is inserted into and fixed to a lower portion of the main body member 900. A seal member 902 is interposed between the main body member 900 and the bottom member 901 to improve the airtightness in the container main body 90.

In the present embodiment, the main body member 900 is made of a translucent material such as acrylic or glass, and constitutes a transparent container whose entire body is a transmissive portion. An administrator or a beverage consumer can visually recognize an extraction state of a coffee beverage in the container main body 90 through the cover portion 102 and the main body member 900 of the container main body 90. The administrator may easily check an extraction operation, and the beverage consumer may enjoy the extraction state.

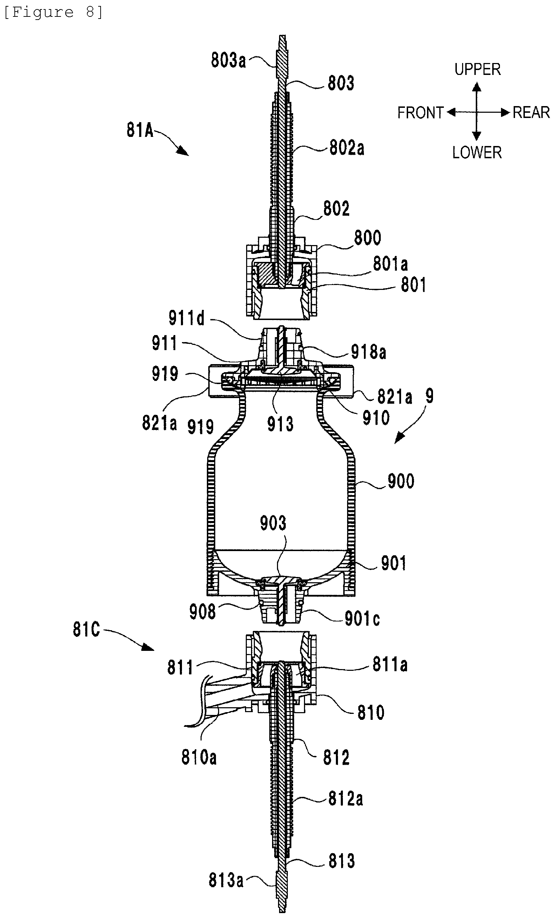

A convex portion 901c is provided in a central portion of the bottom member 901, and the convex portion 901c is provided with a communication hole that allows the inside of the container main body 90 to communicate with the outside and a valve (a valve 903 in Figure 8) that opens and closes the communication hole. The communication hole is used for discharging a waste liquid and a residue when cleaning the inside of the container main body 90. A seal member 908 is provided on the convex portion 901c, and the seal member 908 is a member for maintaining the airtightness between the upper unit 8A or the lower unit 8C and the bottom member 901.

The lid unit 91 includes a base member 911 having a hat shape. The base member 911 includes a convex portion 911d and a flange portion 911c that overlaps the flange portion 90c when the lid unit 91 is closed. The convex portion 911d has the same structure as that of the convex portion 901c of the container main body 90, and is provided with a communication hole that allows the inside of the container main body 90 to communicate with the outside, and a valve (a valve 913 in Figure 8) that opens and closes the communication hole. The communication hole of the convex portion 911d is mainly used for pouring hot water into the container main body 90 and feeding out a coffee beverage. A seal member 918a is provided on the convex portion 911d. The seal member 918a is a member for maintaining the airtightness between the upper unit 8A or the lower unit 8C and the base member 911. The lid unit 91 is also provided with a seal member 919. The seal member 919 improves the airtightness between the lid unit 91 and the container main body 90 when the lid unit 91 is closed. A filter for filtration is held in the lid unit 91.

### <4-3. Upper Unit and Lower Unit>

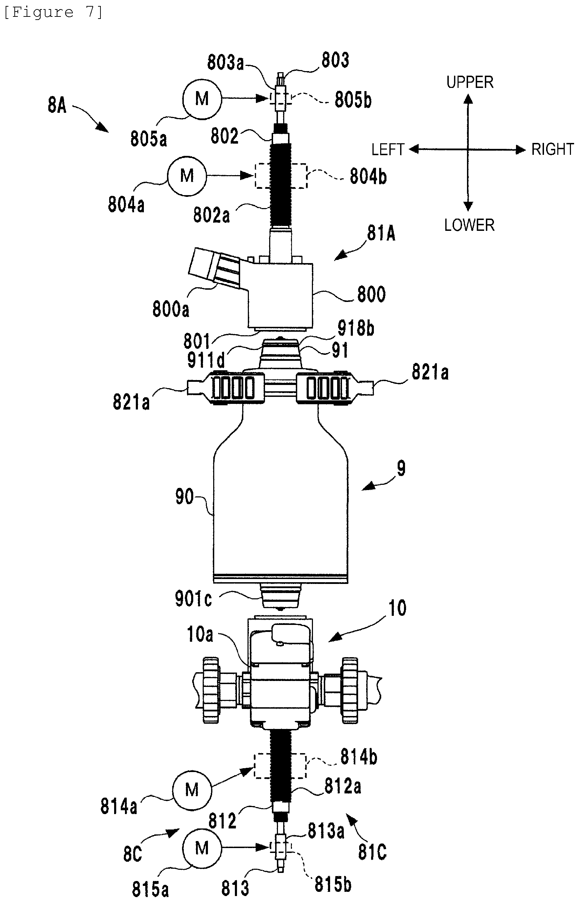

The upper unit 8A and the lower unit 8C will be described with reference to Figures 7 and 8. Figure 7 is a front view showing a configuration of a part of the upper unit 8A and the lower unit 8C, and Figure 8 is a longitudinal cross-sectional view of Figure 7.

The upper unit 8A includes an operation unit 81A. The operation unit 81A performs the opening and closing operation (lifting and lowering) of the lid unit 91 with respect to the container main body 90 and an opening and closing operation of the valves of the convex portions 901c and 911d. The operation unit 81A includes a support member 800, a holding member 801, a lifting and lowering shaft 802, and a probe 803.

The support member 800 is fixed such that a relative position with respect to the frame F does not change, and accommodates the holding member 801. The support member 800 also includes a communication portion 800a that allows the pipe L3 to communicate with the inside of the support member 800. Hot water, water, and atmospheric pressure supplied from the pipe L3 are introduced into the support member 800 via the communication portion 800a.

The holding member 801 is a member capable of detachably holding the lid unit 91. The holding member 801 has a cylindrical space into which the convex portion 911d of the lid unit 91 or the convex portion 901c of the bottom member 901 is inserted, and includes a mechanism that detachably holds the convex portion 911d and the convex portion 901c. The mechanism is, for example, a snap ring mechanism, and is engaged by a constant pressing force, and is disengaged by a constant separating force. The hot water, water, and atmospheric pressure supplied from the pipe L3 can be supplied into the extraction container 9 via the communication portion 800a and the communication hole 801a of the holding member 801.

The holding member 801 is also a movable member provided slidably in the upper-lower direction in the support member 800. The lifting and lowering shaft 802 is provided such that its axial direction is in the upper-lower direction. The lifting and lowering shaft 802 airtightly penetrates a top portion of the support member 800 in the upper-lower direction, and is provided so as to be vertically lifted and lowered with respect to the support member 800.

A top portion of the holding member 801 is fixed to a lower end portion of the lifting and lowering shaft 802. By the lifting and lowering of the lifting and lowering shaft 802, the holding member 801 slides in the upper-lower direction, and the holding member 801 can be attached to and separated from the convex portion 911d and the convex portion 901c. In addition, the lid unit 91 can be opened and closed with respect to the container main body 90.

A screw 802a constituting a lead screw mechanism is formed on an outer circumferential surface of the lifting and lowering shaft 802. A nut 804b is screwed to the screw 802a. The upper unit 8A includes a motor 804a, and the nut 804b is rotated on the spot by a driving force of the motor 804a (without moving up and down). The lifting and lowering shaft 802 is lifted and lowered by the rotation of the nut 804b.

The lifting and lowering shaft 802 is a tubular shaft having a through hole in its central axis, and the probe 803 is inserted into the through hole in a vertically slidable manner. The probe 803 airtightly penetrates the top portion of the holding member 801 in the upper-lower direction, and is provided so as to be vertically lifted and lowered with respect to the support member 800 and the holding member 801.

The probe 803 is an operator that opens and closes the valves 913 and 903 provided inside the convex portions 911d and 901c, and the valves 913 and 903 can be changed from a closed state to an open state by lowering the probe 803, and can be changed from the open state to the closed state (due to the action of a return spring (not shown)) by lifting the probe 803.

A screw 803a constituting a lead screw mechanism is formed on an outer circumferential surface of the probe 803. A nut 805b is screwed to the screw 803a. The upper unit 8A includes a motor 805a, and the nut 805b is rotated on the spot by a driving force of the motor 805a (without moving up and down). The probe 803 is lifted and lowered by the rotation of the nut 805b.

The lower unit 8C includes an operation unit 81C. The operation unit 81C has a configuration obtained by vertically turning the operation unit 81A upside down, and performs the opening and closing operation of the valves 913 and 903 provided inside the convex portions 911d and 901c. Although the operation unit 81C is also configured to be capable of opening and closing the lid unit 91, in the present embodiment, the operation unit 81C is not used to open and close the lid unit 91.

Hereinafter, although the description of the operation unit 81C is substantially the same as the description of the operation unit 81A, the operation unit 81C will be described below. The operation unit 81C includes a support member 810, a holding member 811, a lifting and lowering shaft 812, and a probe 813.

The support member 810 is fixed such that a relative position with respect to the frame F does not change, and accommodates the holding member 811. The support member 810 also includes a communication portion 810a that allows the switching valve 10a of the switching unit 10 to communicate with the inside of the support member 810. Residues of a coffee beverage, water, and ground beans in the container main body 90 are introduced into the switching valve 10a via the communication portion 810a.

The holding member 811 has a cylindrical space into which the convex portion 911d of the lid unit 91 or the convex portion 901c of the bottom member 901 is inserted, and includes a mechanism that detachably holds the convex portion 911d and the convex portion 901c. The mechanism is, for example, a snap ring mechanism, and is engaged by a constant pressing force, and is disengaged by a constant separating force. Residues of a coffee beverage, water, and ground beans in the container main body 90 are introduced into the switching valve 10a via the communication portion 810a and a communication hole 811a of the holding member 811.

The holding member 811 is also a movable member provided slidably in the upper-lower direction in the support member 810. The lifting and lowering shaft 812 is provided such that its axial direction is in the upper-lower direction. The lifting and lowering shaft 812 airtightly penetrates a bottom portion of the support member 800 in the upper-lower direction, and is provided so as to be vertically lifted and lowered with respect to the support member 810.

A bottom portion of the holding member 811 is fixed to a lower end portion of the lifting and lowering shaft 812. By the lifting and lowering of the lifting and lowering shaft 812, the holding member 811 slides in the upper-lower direction, and the holding member 811 can be attached to and separated from the convex portion 901c and the convex portion 911d.

A screw 812a constituting a lead screw mechanism is formed on an outer circumferential surface of the lifting and lowering shaft 812. A nut 814b is screwed to the screw 812a. The lower unit 8C includes a motor 814a, and the nut 814b is rotated on the spot by a driving force of the motor 814a (without moving up and down). The lifting and lowering shaft 812 is lifted and lowered by the rotation of the nut 814b.

The lifting and lowering shaft 812 is a tubular shaft having a through hole in its central axis, and the probe 813 is inserted into the through hole in a vertically slidable manner. The probe 813 airtightly penetrates the bottom portion of the holding member 811 in the upper-lower direction, and is provided so as to be vertically lifted and lowered with respect to the support member 810 and the holding member 811.

The probe 813 is an operator that opens and closes the valves 913 and 903 provided inside the convex portions 911d and 901c, and the valves 913 and 903 can be changed from the closed state to the open state by lifting the probe 813, and can be changed from the open state to the closed state (due to the action of a return spring (not shown)) by lowering the probe 813.

A screw 813a constituting a lead screw mechanism is formed on an outer circumferential surface of the probe 813. A nut 815b is screwed to the screw 813a. The lower unit 8C includes a motor 815a, and the nut 815b is provided so as to rotate on the spot by a driving force of the motor 815a (without moving up and down). The probe 813 is lifted and lowered by the rotation of the nut 815b.

### <4-4. Middle Unit>

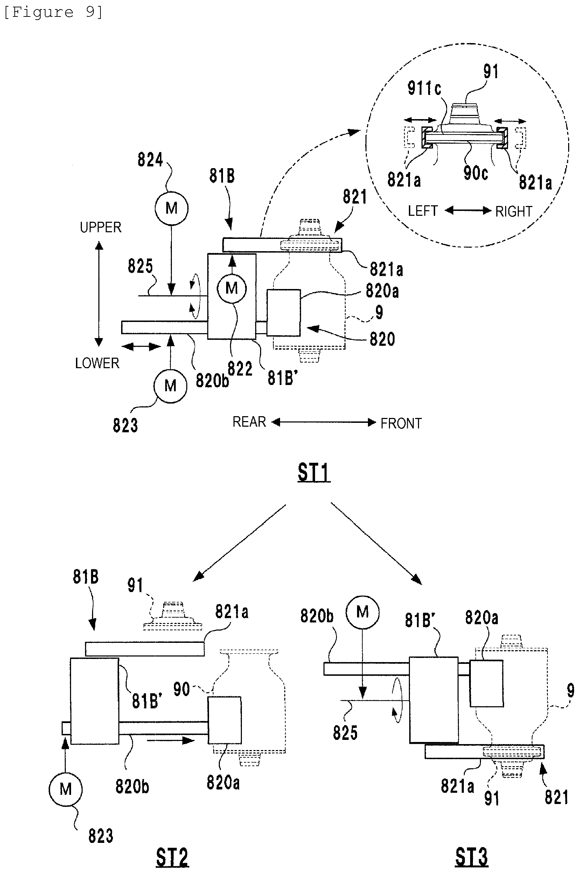

The middle unit 8B will be described with reference to Figures 5 and 9. Figure 9 is a schematic diagram of the middle unit 8B. The middle unit 8B includes a support unit 81B that supports the extraction container 9. The support unit 81B includes a unit main body 81B' that supports a lock mechanism 821 in addition to the arm member 820 described above.

The lock mechanism 821 is a mechanism for maintaining the lid unit 91 in a closed state with respect to the container main body 90. The lock mechanism 821 includes a pair of gripping members 821a that vertically sandwich the flange portion 911c of the lid unit 91 and the flange portion 90c of the container main body 90. The pair of gripping members 821a have a C-shaped cross section in which the flange portion 911c and the flange portion 90c are sandwiched therebetween and fitted to each other, and are opened and closed in the left-right direction by a driving force of a motor 822. When the pair of gripping members 821a are in a closed state, the gripping members 821a are fitted into the flange portion 911c and the flange portion 90c so as to vertically sandwich the flange portion 911c and the flange portion 90c, and the lid unit 91 is airtightly locked with respect to the container main body 90, as indicated by a solid line in an enclosing diagram of Figure 9. In this locked state, even if the holding member 801 is lifted by the lifting and lowering shaft 802 to open the lid unit 91, the lid unit 91 does not move (the lock is not released). That is, a locking force by the lock mechanism 821 is set stronger than a force to open the lid unit 91 using the holding member 801. As a result, it is possible to prevent the lid unit 91 from being opened with respect to the container main body 90 on abnormal occasions.

When the pair of gripping members 821a are in an open state, the gripping members 821a are separated from the flange portion 911c and the flange portion 90c, and the lid unit 91 and the container main body 90 are unlocked, as indicated by a broken line in the enclosing diagram of Figure 9.

In a case where the holding member 801 holds the lid unit 91 and the holding member 801 is lifted from a lowered position to a lifted position, the lid unit 91 is separated from the container main body 90 when the pair of gripping members 821a are in the open state. Conversely, when the pair of gripping members 821a are in the closed state, the holding member 801 is released from the lid unit 91, and only the holding member 801 is lifted.

The middle unit 8B also includes a mechanism that horizontally moves the arm member 820 in the front-rear direction using a motor 823 as a drive source. As a result, the container main body 90 supported by the arm member 820 can be moved between a rear-side extraction position (state ST1) and a front-side bean input position (state ST2). The bean input position is a position at which ground beans are put into the container main body 90, and ground beans ground by the grinder 5B are put into the opening 90a of the container main body 90 from which the lid unit 91 is separated, from the discharge pipe 5C. In other words, a position of the discharge pipe 5C is above the container main body 90 positioned at the bean input position.

The extraction position is a position at which the container main body 90 can be operated by the operation unit 81A and the operation unit 81C, is a position coaxial with the probes 803 and 813, and is a position at which a coffee liquid is extracted. The extraction position is a position on the rear side of the bean input position. Figures 5, 7, and 8 show the case where the container main body 90 is positioned at the extraction position. In this way, by changing a position of container main body 90 according to the input of ground beans, the extraction of a coffee liquid, and the supply of water, it is possible to prevent the steam generated when extracting a coffee liquid from adhering to the discharge pipe 5C which is a supply portion of ground beans.

The middle unit 8B also includes a mechanism that rotates the support unit 81B about a shaft 825 in the front-rear direction using a motor 824 as a drive source. Accordingly, it is possible to change a posture of the container main body 90 (the extraction container 9) from an upright posture (state ST1) in which the neck portion 90b is on an upper side to an inverted posture (state ST3) in which the neck portion 90b is on a lower side. During the rotation of the extraction container 9, the lock mechanism 821 maintains a state in which the lid unit 91 is locked to the container main body 90. The extraction container 9 is turned upside down between the upright posture and the inverted posture. In the inverted posture, the convex portion 911d is positioned at the position of the convex portion 901c in the upright posture. In the inverted posture, the convex portion 901c is positioned at the position of the convex portion 911d in the upright posture. Therefore, in the inverted posture, the opening and closing operation with respect to the valve 903 can be performed by the operation unit 81A, and the opening and closing operation with respect to the valve 913 can be performed by the operation unit 81C.

### <5. Control Device>

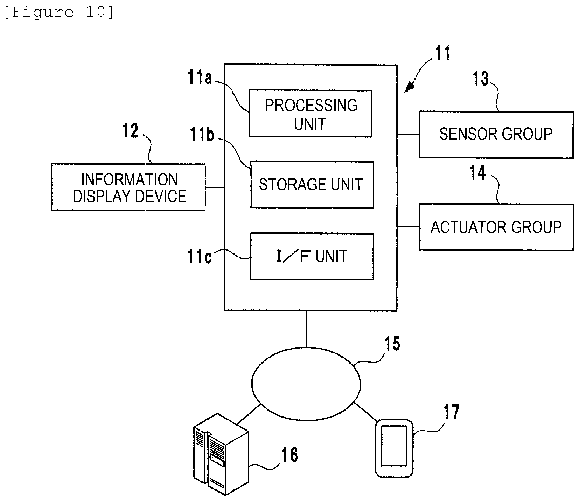

A control device 11 of the beverage production device 1 will be described with reference to Figure 10. Figure 10 is a block diagram of the control device 11.

The control device 11 controls the entire beverage production device 1. The control device 11 includes a processing unit 11a, a storage unit 11b, and an interface (I/F) unit 11c. The processing unit 11a is, for example, a processor such as a CPU. The storage unit 11b is, for example, a RAM or a ROM. The I/F unit 11c includes an input and output interface that inputs and outputs a signal between an external device and the processing unit 11a. The I/F unit 11c also includes a communication interface capable of performing data communication with a server 16 and a mobile terminal 17 via a communication network 15 such as the Internet. The server 16 can communicate with a mobile terminal 17 such as a smartphone via the communication network 15, and can receive, for example, information such as a reservation for beverage production or an impression from the mobile terminal 17 of a beverage consumer. A system for extracting a coffee beverage liquid from an extraction target includes the beverage production device 1, the server 16, and the mobile terminal 17.

The processing unit 11a executes a program stored in the storage unit 11b, and controls an actuator group 14 based on an instruction from the information display device 12, a detection result of a sensor group 13, or an instruction from the server 16. The sensor group 13 includes various sensors (for example, a hot water temperature sensor, an operation position detection sensor of a mechanism, a pressure sensor) provided in the beverage production device 1. The actuator group 14 includes various actuators (for example, a motor, an electromagnetic valve, a heater, and the like) provided in the beverage production device 1.

A beverage consumer (user) can set a profile for beverage production from the portable terminal 17. For example, on a screen of the mobile terminal 17, the user can set the amount of coffee beans, the grind size, the amount of steaming hot water, a steaming time, the amount of hot water to be extracted, an extraction pressure, an extraction time, and the like, using a slide bar, for example. By enabling parameter adjustment for coffee beverage extraction on the mobile terminal 17, the user may be able to easily enjoy the feeling of coffee extraction operation like a barista. After the setting, the user visits a cafe for example, and holds a two-dimensional code representing the setting content displayed on the screen of the mobile terminal 17 over an imaging unit of the information display device 12, so as to send the setting content to the information display device 12. The setting content may be sent to the information display device 12 by other methods than the two-dimensional code, and for example, the setting content may be sent to the information display device 12 by short-range wireless communication. Note that in the present embodiment, the above parameters for extracting a coffee beverage are referred to as an extraction profile or a recipe.

### <6. Operation Control Example>

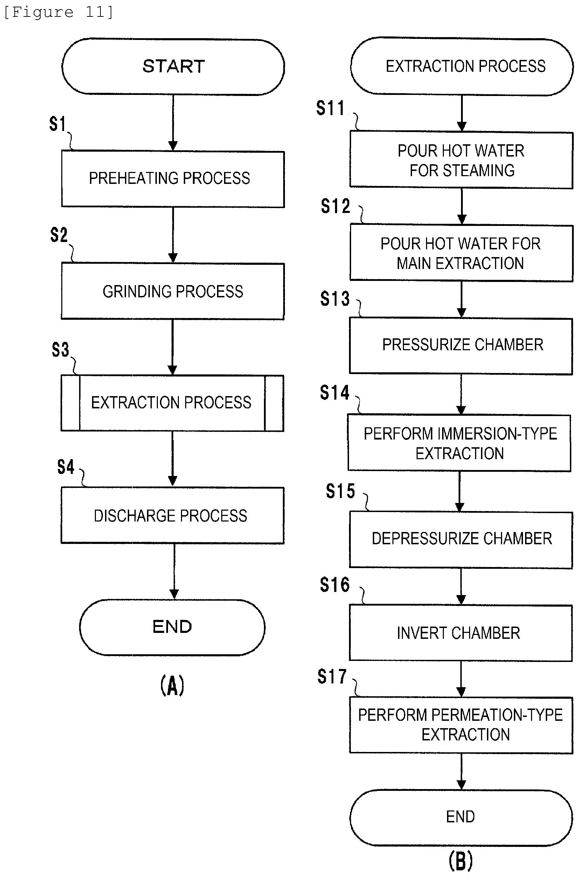

A control process example of the beverage production device 1 executed by the processing unit 11a will be described with reference to (A) and (B) of Figure 11. (A) of Figure 11 shows a control example related to a single coffee beverage production operation. A state of the beverage production device 1 before a production instruction is referred to as a standby state. A state of each mechanism in the standby state is as follows.

The extraction device 3 is in the state of Figure 5. The extraction container 9 is in the upright posture and is positioned at the extraction position. The lock mechanism 821 is in the closed state, and the lid unit 91 closes the opening 90a of the container main body 90. The holding member 801 is at the lowered position and is attached to the convex portion 911d. The holding member 811 is at the lifted position and is attached to the convex portion 901c. The valves 903 and 913 are in the closed state. The switching valve 10a allows the communication portion 810a of the operation unit 8C to communicate with the waste tank T.

When there is a coffee beverage production instruction in the standby state, a process of (A) of Figure 11 is executed. In S1, a preheating process is executed. The process is a process of pouring hot water into the container main body 90 and heating the container main body 90 in advance. First, the valves 903 and 913 are opened. Thereby, the pipe L3, the extraction container 9, and the waste tank T communicate with one another.

The electromagnetic valve 72i is opened for a predetermined time (for example, 1500 milliseconds) and then closed. Thereby, hot water is poured into the extraction container 9 from the water tank 72. Next, the electromagnetic valve 73 is opened for a predetermined time (for example, 500 milliseconds) and then closed. Thereby, the air in the extraction container 9 is pressurized, and the discharge of hot water to the waste tank T is facilitated. Through the above process, the inside of the extraction container 9 and the pipe L2 are preheated, and hot water can be less cooled in the subsequent production of a coffee beverage.

In S2, a grinding process is performed. Here, roasted coffee beans are pulverized, and the ground beans are put into the container main body 90. First, the lock mechanism 821 is opened to lift the holding member 801 to the lifted position. The lid unit 91 is held by the holding member 801 and is lifted together with the holding member 801. As a result, the lid unit 91 is separated from the container main body 90. The holding member 811 is lowered to the lowered position. The container main body 90 is moved to the bean input position. Next, the reservoir device 4 and the pulverizing device 5 are operated. Thus, one cup of roasted coffee beans is supplied from the reservoir device 4 to the grinder 5A. The roasted coffee beans are ground in two stages by the grinder 5A and the grinder 5B, and wastes are separated by the separation device 6. The ground beans are put into the container main body 90.

The container main body 90 is returned to the extraction position. The holding member 801 is lowered to the lowered position, and the lid unit 91 is attached to the container main body 90. The lock mechanism 821 is in a closed state, and the lid unit 91 is airtightly locked to the container main body 90. The holding member 811 is lifted to the lifted position. In the valves 903 and 913, the valve 903 is in the open state, and the valve 913 is in the closed state.

In S3, an extraction process is performed. Here, a coffee liquid is extracted from the ground beans in the container main body 90. (B) of Figure 11 is a flowchart of the extraction process of S3.

In S11, in order to steam the ground beans in the extraction container 9, hot water in an amount less than one cup is poured into the extraction container 9. Here, the electromagnetic valve 72i is opened for a predetermined time (for example, 500 milliseconds) and then closed. Thereby, hot water is poured into the extraction container 9 from the water tank 72. Thereafter, the process of S11 ends after waiting for a predetermined time (for example, 5000 milliseconds). By this process, the ground beans can be steamed. By steaming the ground beans, carbon dioxide gas contained in the ground beans can be released, and a subsequent extraction effect can be enhanced.

In S12, hot water is poured into the extraction container 9 in an amount to add up to one cup of hot water so that the extraction container 9 accommodates one cup of hot water. Here, the electromagnetic valve 72i is opened for a predetermined time (for example, 7000 milliseconds) and then closed. Thereby, hot water is poured into the extraction container 9 from the water tank 72.

By the process of S12, the inside of the extraction container 9 can be brought into a state of a temperature exceeding 100°C at 1 atm (for example, about 110°C). Next, the inside of the extraction container 9 is pressurized in S13. Here, the electromagnetic valve 73b is opened for a predetermined time (for example, 1000 milliseconds) and then closed, and the inside of the extraction container 9 is pressurized to an atmospheric pressure at which hot water does not boil (for example, about 4 atm (about 3 atm in gauge pressure)). Thereafter, the valve 903 is brought into the closed state.

Next, this state is maintained for a predetermined time (for example, 7000 milliseconds) to perform immersion-type coffee liquid extraction (S14). As a result, immersion-type coffee liquid extraction is performed under a high temperature and high pressure. In the immersion-type extraction under a high temperature and high pressure, the following effects can be expected. First, by setting a high pressure, hot water can be easily permeated into the ground beans, and extraction of a coffee liquid can be facilitated. Second, by setting a high temperature, the extraction of the coffee liquid is facilitated. Third, by setting a high temperature, the viscosity of an oil contained in the ground beans decreases, and the extraction of the oil is facilitated. As a result, a coffee beverage with high aroma can be produced.

A temperature of hot water (high temperature water) may be higher than 100°C, but a higher temperature is more advantageous in terms of the extraction of the coffee liquid. On the other hand, increasing the temperature of the hot water generally results in an increase in cost. Therefore, the temperature of the hot water may be, for example, 105°C or more, or 110°C or more, or 115°C or more, and may be, for example, 130°C or less, or 120°C or less. The atmospheric pressure may be any atmospheric pressure at which the hot water does not boil.

In S15, the inside of the extraction container 9 is depressurized. Here, the atmospheric pressure in the extraction container 9 is switched to an atmospheric pressure at which the hot water boils. Specifically, the valve 913 is brought into the open state, and the electromagnetic valve 73c is opened for a predetermined time (for example, 1000 milliseconds) and then closed. The inside of the extraction container 9 is open to the atmosphere. Thereafter, the valve 913 is brought into the closed state again.

The inside of the extraction container 9 is rapidly depressurized to an atmospheric pressure lower than the boiling point pressure, and the hot water in the extraction container 9 boils at once. The hot water and ground beans in the extraction container 9 are explosively scattered in the extraction container 9. As a result, the hot water can evenly boil. The destruction of cell walls of the ground beans can be facilitated, and the subsequent extraction of the coffee liquid can be further facilitated. In addition, since the ground beans and the hot water can be stirred by this boiling, the extraction of the coffee liquid can be facilitated. In this way, in the present embodiment, the extraction efficiency of the coffee liquid can be improved.

In S16, the extraction container 9 is inverted from the upright posture to the inverted posture. Here, the holding member 801 is moved to the lifted position and the holding member 811 is moved to the lowered position. Then, the support unit 81B is rotated. Thereafter, the holding member 801 is returned to the lowered position, and the holding member 811 is returned to the lifted position. In the extraction container 9 in the inverted posture, the neck portion 90b and the lid unit 91 are positioned on the lower side.

In S17, permeation-type coffee liquid extraction is performed, and a coffee beverage is dispensed into the cup C. Here, the switching valve 10a is switched to allow the pouring portion 10c and the passage portion 810a of the operation unit 81C to communicate with each other. Both the valves 903 and 913 are brought into the open state. Further, the electromagnetic valve 73b is opened for a predetermined time (for example, 10000 milliseconds), and the inside of the extraction container 9 is set to a predetermined atmospheric pressure (for example, 1.7 atm (0.7 atm in gauge pressure)). In the extraction container 9, a coffee beverage in which the coffee liquid is dissolved in the hot water passes through a filter provided in the lid unit 91 and is dispensed into the cup C. The filter regulates the leakage of a residue of the ground beans. Thus, the extraction process ends.

In the present embodiment, the extraction efficiency of the coffee liquid can be improved by using the immersion-type extraction in S14 and the permeation-type extraction in S17 in combination. When the extraction container 9 is in the upright posture, the ground beans accumulate from the body portion 90e to the bottom portion 90f. On the other hand, when the extraction container 9 is in the inverted posture, the ground beans accumulate from the shoulder portion 90d to the neck portion 90b. A cross-sectional area of the body portion 90e is larger than a cross-sectional area of the neck portion 90b, and a deposition thickness of the ground beans in the inverted posture is larger than a deposition thickness in the upright posture. That is, the ground beans accumulate relatively thinly and widely when the extraction container 9 is in the upright posture, and accumulate relatively thickly and narrowly when the extraction container 9 is in the inverted posture.

In the present embodiment, since the immersion-type extraction in S14 is performed when the extraction container 9 is in the upright posture, the hot water and the ground beans can be brought into contact over a wide range, and the extraction efficiency of the coffee liquid can be improved. However, in this case, the hot water and the ground beans tend to partially come into contact with each other. On the other hand, since the permeation-type extraction in S17 is performed when the extraction container 9 is in the inverted posture, the hot water passes through the accumulated ground beans while being in contact with more of the ground beans. The hot water comes into contact with the ground beans more evenly, and the extraction efficiency of the coffee liquid can be further improved.

Returning to (A) of Figure 11, after the extraction process of S3, a discharge process of S4 is performed. Here, a process related to cleaning in the extraction container 9 is performed. The extraction container 9 is cleaned by returning the extraction container 9 from the inverted posture to the upright posture and supplying water (purified water) to the extraction container 9. Then, the inside of the extraction container 9 is pressurized, and the water in the extraction container 9 is discharged to the waste tank T together with a residue of the ground beans.

Thus, one coffee beverage production process is completed. Thereafter, the same process is repeated for each production instruction. The time required for producing one coffee beverage is, for example, about 60 seconds to 90 seconds.

### <7. Display Control Example>

Display control process during the production of the coffee beverage according to the present embodiment will be described below. In the present embodiment, an image during production selected by the user is displayed on the information display device 12 during production of a coffee beverage corresponding to a recipe. For example, according to a selection by the user, description of each production step of the coffee beverage is displayed as an image during production while the coffee beverage is being produced. For example, according to a selection by the user, a profile of a recipe creator such as a barista is displayed as the image during production while the coffee beverage is being produced. For example, according to a selection by the user, information of a plantation of the coffee beans used in the selected recipe is displayed as the image during production while the coffee beverage is being produced. It should be noted that the "user" may be a staff member or administrator who provides the coffee beverage using the beverage production device 1, or a general customer who orders the coffee beverage.

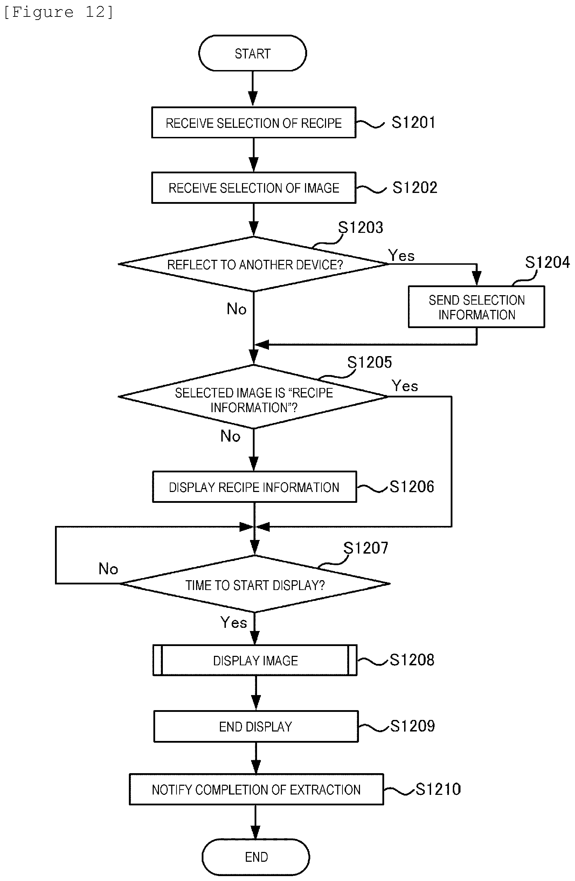

Figure 12 is a flowchart showing the display control process during the production of the coffee beverage in the present embodiment. The process in Figure 12 is implemented by, for example, loading a program stored in ROM of the storage unit 11b into RAM by CPU of the processing unit 11a and executing the program. Such a program constitutes a program as the present invention.

In S1201, the processing unit 11a receives recipe selection from the user. The recipe selection may be configured as follows. For example, on the screen displayed on the information display device 12, the recipe selection is displayed as a plurality of selectable items such as "Blend A", "Blend B", and the like corresponding to types of coffee beans. In each item, parameters such as the amount of coffee beans, the grind size, the amount of steaming hot water, the steaming time, the amount of hot water to be extracted, the extraction pressure, and the extraction time are linked and stored as a recipe. That is, by selecting any item on the screen, the linked and stored parameters are selected as a recipe. Note that the processing unit 11a may receive the recipe selection on the screen of the information display device 12, or may acquire information on the recipe selected on the mobile terminal 17.

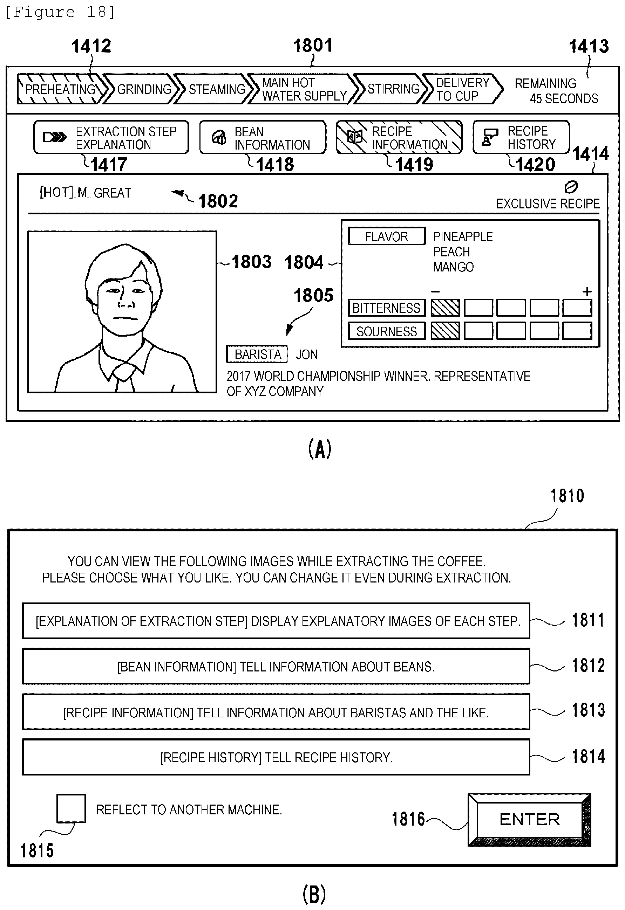

In S1202, the processing unit 11a receives from the user a selection of an image to be displayed during the production of the coffee beverage. After receiving the recipe selection in S1201, the processing unit 11a displays a screen 1810 shown in (B) in Figure 18 on the information display device 12. Items 1811 to 1814 are displayed on the screen 1810 as selection items. The item 1811 is selected to display an image explaining each production step during the production of the coffee beverage. The item 1812 is selected to display information on the coffee beans during the production of the coffee beverage. The item 1813 is selected to display information on a recipe creator such as a barista during the production of the coffee beverage. The item 1814 is selected to display history information related to the recipe during the production of the coffee beverage, for example, one-point information such as an arrangement method discovered during devising of the recipe. An item 1815 is selected to send information on the item selected from the items 1811 to 1814 to another beverage production device 1. When a button 1816 is pressed, the setting content in the screen 1810 is confirmed, and the process proceeds to S1203. By the process in S1202, it may be possible to receive the image selection by the user before the coffee beverage is produced.

In S1203, the processing unit 11a determines whether to reflect the selection information of the items 1811 to 1814 to the another beverage production device 1. For example, when the item 1815 is selected, the processing unit 11a determines to reflect the selection information of the items 1811 to 1814 to another beverage production device 1, and in S1204, the processing unit 11a sends the selection information of the items 1811 to 1814 to the another beverage production device 1. The another beverage production device 1 that receives the selection information defaults an image to be displayed during the production of the coffee beverage based on the received selection information. After S1204, the process proceeds to S1205. On the other hand, if it is determined not to reflect the selection information of the items 1811 to 1814 to the another beverage production device 1, the process proceeds to S1205.

In S1205, the processing unit 11a determines whether the selected item received in S1202 is recipe information of the item 1813. If it is determined that the selected item received in S1202 is the recipe information of the item 1813, the process proceeds to S1207. On the other hand, if it is determined that the selected item received in S1202 is not the recipe information of the item 1813, the process proceeds to S1206.

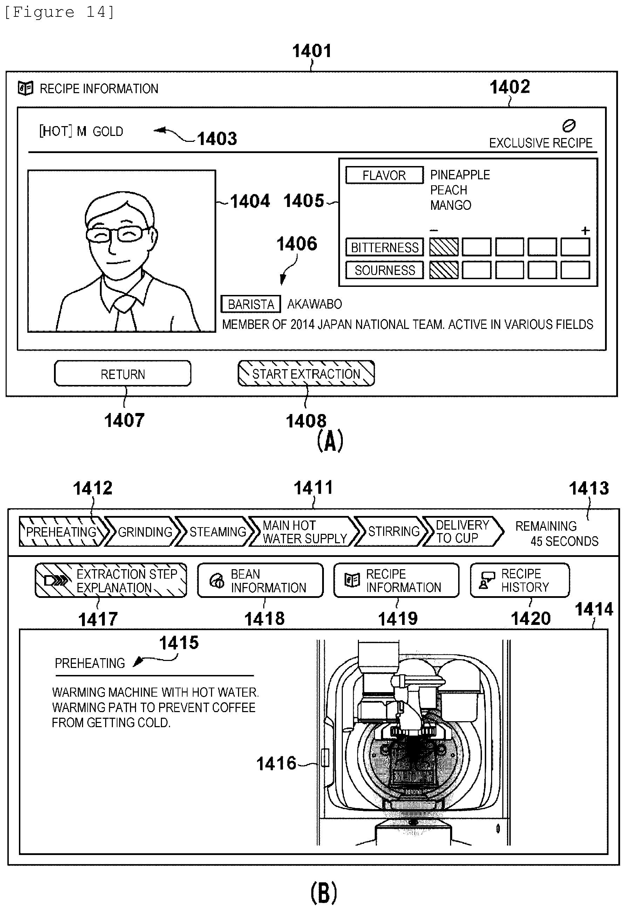

In S1206, the processing unit 11a displays a screen 1401 in (A) in Figure 14 on the information display device 12. Information about this recipe is displayed in a region 1402 of the screen 1401. As the information about this recipe, for example, a name 1403 of this recipe, a photo image 1404 of the recipe creator such as a barista, a feature 1405 of this recipe, and a barista profile 1406 are displayed. The region 1402 is not limited to displaying these pieces of information, and may display other information. When a return button 1407 is pressed, the display returns to the previously displayed screen such as the recipe selection screen. When an extraction start button 1408 is pressed, production of the coffee beverage is started based on this recipe.

In this way, by displaying the screen 1401 before starting the production of the coffee beverage, it is possible to provide the user with the information about the recipe creator, regardless of the selection made in S1202. After S1206, the process proceeds to S1207.

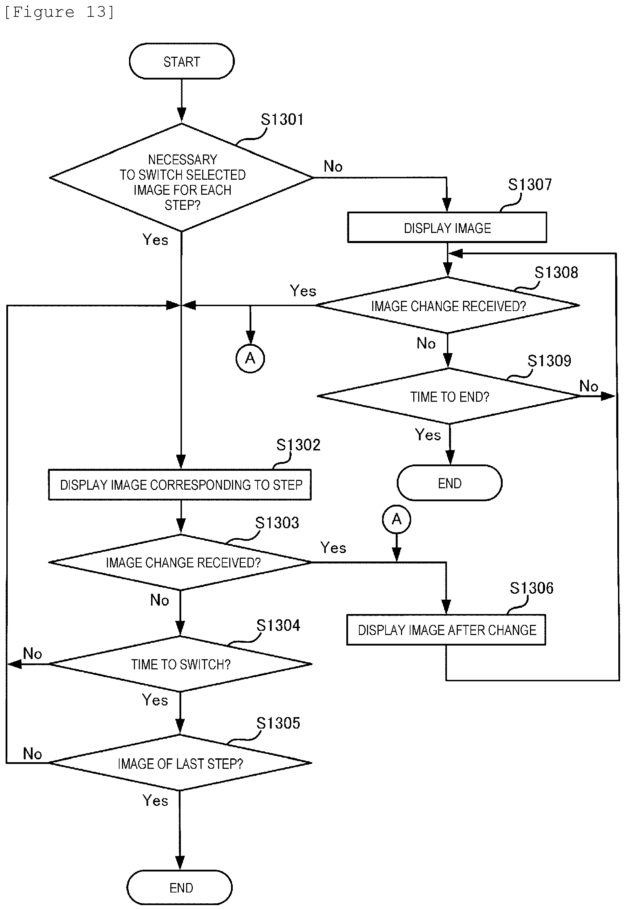

In S1207, the processing unit 11a waits for a display start timing of the selected image received in S1202. For example, when the preheating process of S1 in (A) in Figure 11 is started, the processing unit 11a determines that it is time to start displaying the selected image received in S1202, and in S1208, starts to display the selected image received in S1202. The process of S1208 will be described later with reference to Figure 13.

In S1209, the processing unit 11a ends the image display. For example, the processing unit 11a ends the image display when the discharge process of S4 in (A) in Figure 11 is completed. Then, in S1210, the processing unit 11a displays on the information display device 12 a notification screen indicating that the extraction of coffee is completed. The notification screen only needs to indicate that the extraction of coffee is completed, and may be, for example, a message such as "The extraction is completed. Please take your coffee". Note that the message is not limited to text display, and may be a still image, a moving image, or a combination thereof. After S1210, the process of Figure 12 ends.

Figure 13 is a flowchart showing the process of S1208. In S1301, the processing unit 11a determines whether it is necessary to switch the display of the selected image received in S1202 for each production step of the coffee beverage. For example, when receiving the selection of an item 1811 in S1202, the processing unit 11a determines that switching is necessary for each production step of the coffee beverage, and the process proceeds to S1302.

In S1302, the processing unit 11a displays an image corresponding to the production step. For example, when the process of S1302 is executed for the first time, the processing unit 11a displays a screen 1411 of (B) in Figure 14 corresponding to the preheating process of S1 in Figure 11 on the information display device 12. A region 1412 of the screen 1411 identifiably displays the currently executed production step. A region 1413 displays the remaining time for the current step. A region 1414 displays information corresponding to a selected tab among tabs 1417 to 1420. The tab 1417 corresponds to an item 1811 in (B) in Figure 18, and when the tab 1417 is selected, an explanatory image of each production step is displayed in the region 1414. The tab 1418 corresponds to an item 1812 in (B) in Figure 18, and when the tab 1418 is selected, information about the coffee beans is displayed in the region 1414. The tab 1419 corresponds to an item 1813 in (B) in Figure 18, and when the tab 1419 is selected, information about the recipe is displayed in the region 1414. The tab 1410 corresponds to an item 1814 in (B) in Figure 18, and when the tab 1420 is selected, history information related to the recipe is displayed in the region 1414.

An example in which the tab 1417 is selected is shown in (B) of Figure 14, and an explanatory image of each production step is displayed in the region 1414. A region 1415 displays the name "preheating" of the currently executed production step and explanation thereof, and a region 1416 displays an image of the currently executed production step "preheating".

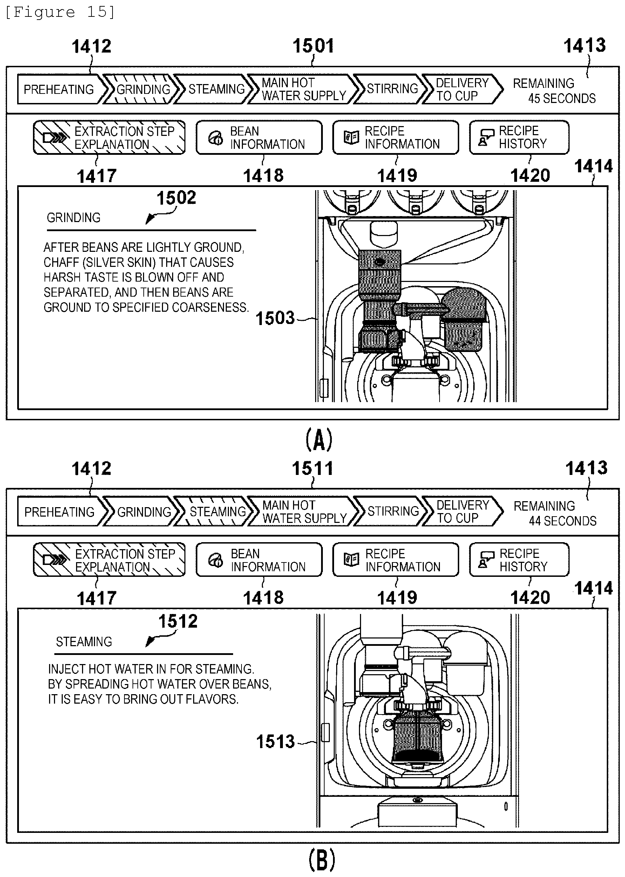

If the currently executed production step is "grinding", a screen 1501 in (A) in Figure 15 is displayed. A region 1502 of the screen 1501 displays the name "grinding" of the currently executed production step and explanation thereof, and a region 1503 displays an image of the currently executed production step "grinding".

If the currently executed production step is "steaming", a screen 1511 in (B) in Figure 15 is displayed. A region 1512 of the screen 1511 displays the name "steaming" of the currently executed production step and explanation thereof, and a region 1513 displays an image of the currently executed production step "steaming".

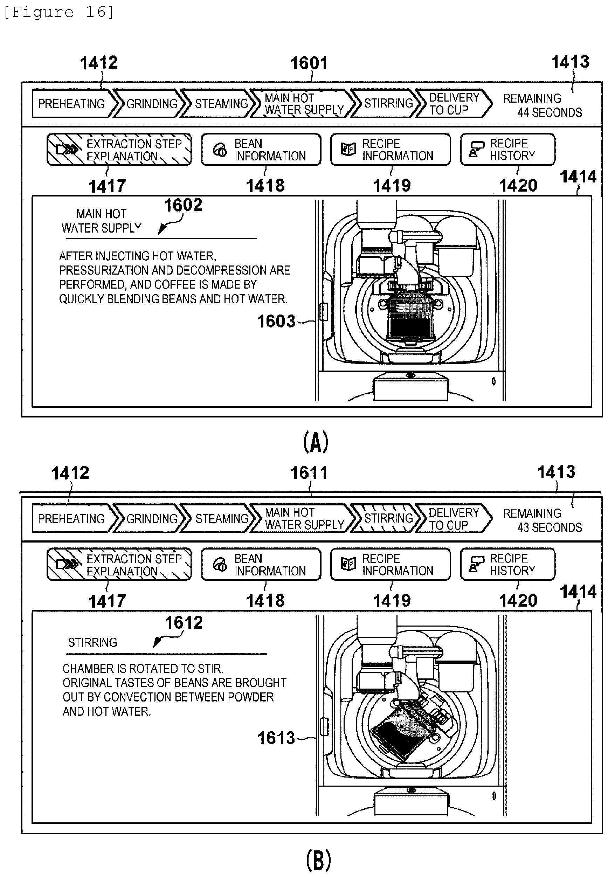

If the currently executed production step is "main hot water supply", a screen 1601 in (A) in Figure 16 is displayed. A region 1602 of the screen 1601 displays the name "main hot water supply" of the currently executed production step and explanation thereof, and a region 1603 displays an image of the currently executed production step "main hot water supply".

If the currently executed production step is "stirring (chamber reversal)", a screen 1611 in (B) in Figure 16 is displayed. A region 1612 of the screen 1611 displays the name "stirring" of the currently executed production step and explanation thereof, and a region 1613 displays an image of the currently executed production step "stirring".

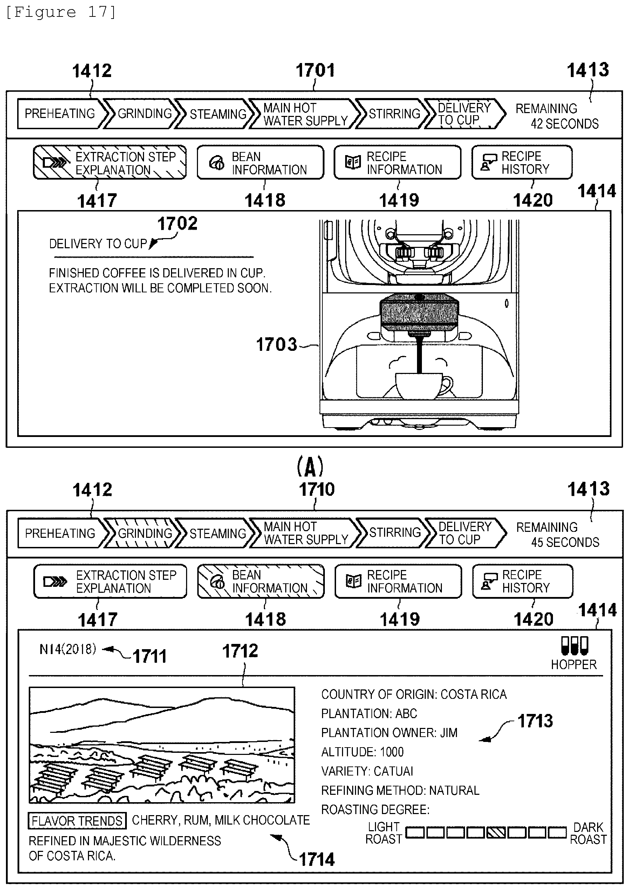

If the currently executed production step is "delivery to cup (sending out)", a screen 1701 in (A) in Figure 17 is displayed. A region 1702 of the screen 1701 displays the name "delivery to cup" of the currently executed production step and explanation thereof, and a region 1703 displays an image of the currently executed production step "delivery to cup".

The images of the regions 1416, 1503, 1513, 1603, 1613, and 1703 may be, for example, identifiable display of members currently in operation. The image may be a still image, or may be a moving image such as an animation or a video image. Whether the images of the regions 1416, 1503, 1513, 1603, 1613, and 1703 are to be moving images may be selectable on the screen 1810 in (B) in Figure 18, for example. That is, in the present embodiment, "image selection" by selecting the tabs 1417 to 1420 includes at least selection of image type, selection from still images, selection from moving images, and selection from still images and moving images.

In S1303, the processing unit 11a determines whether a change of the image to be displayed is received. For example, the processing unit 11a determines whether a tab for displaying an image other than the currently displayed image is selected among the tabs 1417 to 1420. For example, when the screen 1411 in (B) of Figure 13 is displayed in S1302, and any of the tabs 1418 to 1420 is pressed, it is determined that a change of the image is received, and the process proceeds to S1306. On the other hand, if it is determined that the change of the image is not received, the process proceeds to S1304.

In S1304, the processing unit 11a determines whether it is time to switch the image to be displayed, based on whether it is time to switch the production step of the coffee beverage. For example, when the processing unit 11a proceeds from the preheating process of S1 to the grinding process of S2 in (A) of Figure 11, it is determined that it is time to switch the image to be displayed, and the process proceeds to S1305. On the other hand, if it is determined that it is not the time to switch the image to be displayed, the process from S1302 is repeated.

In S1305, the processing unit 11a determines whether the image displayed before switching is an image corresponding to the last production step. For example, if the image displayed before switching is the screen 1701 in (A) in Figure 17 corresponding to the discharge process in S4 in (A) in Figure 11, the processing unit 11a determines that it is the image corresponding to the last production step, and ends the process in Figure 13. After the end of Figure 13, the display of the image is ended in S1209 in Figure 12. On the other hand, if it is determined that it is not the image corresponding to the last production step, the process from S1302 is repeated.

If it is determined that the change of the image to be displayed is received in S1303, the processing unit 11a displays the changed image in S1306. For example, when the tab 1418 is pressed while the screen 1501 in (A) in Figure 15 is being displayed, the processing unit 11a displays a screen 1710 in (B) in Figure 17. In a region 1414 of the screen 1710, a name 1711 of this recipe, a photo image 1712 of a plantation of the coffee beans corresponding to this recipe, information 1713 about the coffee beans and the plantation, and explanation 1714 are displayed. The region 1414 of the screen 1710 is not limited to displaying these pieces of information, and may display other information. Note that the screen 1710 displays the same content in any production step of the coffee beverage. By displaying the screen 1710, it may be possible to provide the user with the information about the plantation of the coffee beans corresponding to the recipe.

For example, when the tab 1419 is pressed while the screen 1411 in (B) in Figure 14 is being displayed, the processing unit 11a displays a screen 1801 in (A) in Figure 18. A name 1802 and a photo image 1803 of this recipe, and features 1804 and a profile 1805 of this recipe on the screen 1801 are the same as the explanation of the name 1403 and the photo image 1404 of the recipe and the features 1405 and the profile 1406 of the recipe in (A) in Figure 13. Note that the screen 1801 displays the same content in any production step of the coffee beverage. By displaying the screen 1801, it may be possible to provide the user with the information about the creator of the recipe.

The photo images 1404, 1712, and 1803 described above may be still images, or moving images such as animation or a video image.

In the present embodiment, when the process of S1306 is started, the image after switching is displayed from a time corresponding to elapsed time displayed before switching. For example, when the elapsed time of the screen 1501 displayed before switching is 10 seconds, in S1306, the processing unit 11a displays the screen 1710 from the time when 10 seconds elapses. With such a configuration, the user may be able to check the remaining time of the region 1413 regardless of whether the image is switched. After S1306, the process proceeds to S1308.

In S1308, the processing unit 11a determines whether a change of the image to be displayed is received. For example, the processing unit 11a determines whether a tab for displaying an image other than the currently displayed image is selected among the tabs 1417 to 1420. When the screen 1710 of (B) in Figure 17 is displayed in S1308 and pressing of any of the tabs 1417, 1419, and 1420 is accepted, it is determined that a change of the image to be displayed is received. Here, if pressing of the tab 1417 is received, the process proceeds to S1302, and if pressing of either of the tabs 1419 and 1420 is received, the process proceeds to S1306. When the process proceeds to S1302 and the process of S1302 is started, the image after switching is displayed from the time corresponding to the elapsed time displayed before switching, as described above. When the process proceeds to S1306 and the process of S1306 is started, the image after switching is also displayed from the time corresponding to the elapsed time displayed before switching, as described above. On the other hand, if it is determined in S1308 that the change of the image to be displayed is not received, the process proceeds to S1309.

In S1309, the processing unit 11a determines whether it is time to end displaying the image. For example, when the discharge process of S4 in (A) in Figure 11 is ended, the processing unit 11a determines that it is time to end displaying the image, and ends the process of Figure 13. After the end of Figure 13, the display of the image is ended in S1209 in Figure 12. On the other hand, if it is determined that it is not the time to end displaying the image, the process from S1308 is repeated.

S1301 is referred to again. If it is determined in S1301 that the selected image received in S1202 does not need to be switched for each production step of the coffee beverage, the process proceeds to S1307. For example, if selection of any one of the items 1812 to 1814 is received in S1202, it is determined that switching is not necessary for each production step of the coffee beverage, and the process proceeds to S1307. In S1307, the processing unit 11a displays an image corresponding to the selected item received in S1202, for example, the screen 1710 or the screen 1801. After S1307, the process advances to S1308, and the above-described process is performed.

In the above description, although it has been explained that the images in the regions 1416, 1503, 1513, 1603, 1613, and 1703 may be moving images, it is possible to select whether to use moving images on the screen 1810 in (B) of Figure 18.

The display control process according to the present embodiment is described above, but when occurrence of an error related to beverage production is determined internally, an error screen can be displayed, and the user may not be able to select the image during production while the error screen is being displayed. Here, the error means, for example, a cover opening error when opening of the cover portion is detected, and various errors (for example, temperature error and pressure error) when various sensors (for example, the temperature sensor and the pressure sensor) indicate an abnormal value.

In the above, an example of displaying the image during production such as a moving image on the information display device 12 is shown, but the present invention is not limited to displaying one image during production in one display region (display unit), and a plurality of images during production may be configured to be displayed in a plurality of display regions. For example, an image during production "barista image" may be displayed in one display region of the information display device 12, and an image during production "plantation image" may be displayed in another display region of the information display device 12 in parallel, and an image during production "production step image" may be displayed on the cover portion 102.

The screen of the image during production selected by the user is not limited to displaying the name of the image during production (tabs 1417 to 1420) as shown in (B) of Figure 14, and may alternately display each image during production or part of each image during production. The user may be prompted to select the image during production. For example, after the beverage production is started, for a few seconds during the user selection period until a selection is made by the user or until some time elapses, the tab 1417 in (B) in Figure 14 is selected, and an image during production "extraction step explanation" is displayed in the region 1414. For the next few seconds, the tab 1418 in (B) in Figure 14 is selected, and the image during production "bean information" is displayed in the region 1414. For the next few seconds, the tab 1419 in (B) in Figure 14 is selected, and the image during production "recipe information" is displayed in the region 1414. For the next few seconds, the tab 1420 in (B) in Figure 14 is selected, and an image during production "recipe history" is displayed in the region 1414. For the next few seconds, the tab 1417 in (B) in Figure 14 is selected, and an image during production "extraction step explanation" is displayed in the region 1414.

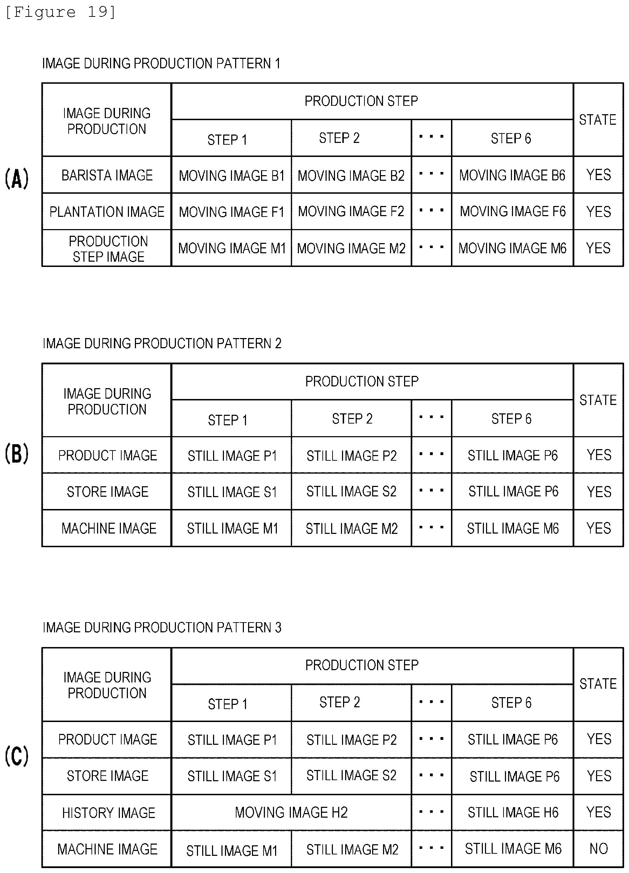

A plurality of images during production may be registered in advance. Figure 19 is a diagram showing examples of a management table showing a pattern of images during production pre-stored in, for example, the storage unit 11b. The display of the image during production is controlled based on the management table shown in Figure 19. The table in Figure 19 is displayed, for example, on a maintenance screen of the beverage production device and can be edited by an administrator. For example, when an image during production pattern 1 in (A) in Figure 19 is adopted as the image during production, as described above with reference to Figures 14 to 18, moving images such as "barista image", "plantation image", and "production step image" are selectively displayed. For example, when an image during production pattern 2 in (B) in Figure 19 is adopted as the image during production, still images such as "product image", "store image", and "machine image" are selectively displayed. For example, when an image during production pattern 3 in (C) in Figure 19 is adopted as the image during production, still images and moving images such as "product image", "store image", and "history image" are selectively displayed.

As described above, in the present embodiment, it is possible to set a moving image or a still image for each of the six production steps (preheating, grinding, steaming, main hot water supply, stirring, and delivery to cup), and it is also possible to set one image (moving image, still image) for a plurality of production steps. For example, in a period during which a "step 1" (preheating step) is performed when the "barista image" is selected by the user, a "moving image B1" is reproduced, and when switching to a "step 2" (grinding step), the image is also switched from the "moving image B1" to a "moving image B2" and reproduced. On the other hand, in a period from the "step 1" (preheating step) to the "step 2" (grinding step) when the "history image" is selected by the user, a "moving image H2" is reproduced without switching. Note that when one moving image is registered in a certain step, the moving image may be repeatedly reproduced unless another image during production is reselected before the step proceeds to the next step, or a final screen of the moving image may be displayed still.

In each table of Figure 19, the "step 1" is the preheating step, the "step 2" is the grinding step (a step of grinding beans), the "step 3" is a steaming step, the "step 4" is the main hot water supply step, the "step 5" is the stirring step, and the "step 6" is the delivery to cup step. Note that the "step 3" to "step 5" are omitted.

The "state" in each table in Figure 19 is a field for registering whether the user can select the image during production in the corresponding row. If this field is "YES", the user can select the image during production of the corresponding row, and if this field is "NO", the user cannot select the image during production of the corresponding row. It may be configured so that options (for example, the tabs 1417 to 1420 in (B) in Figure 14) for the user are not displayed unless the field is "YES".

In Figure 19, the "moving image B1" to "moving image B6", "moving image F1" to "moving image F6", "moving image M1" to "moving image M6", and "moving image H2" indicate names of various moving images, and the "still image P1" to "still image P6", "still image S1" to "still image S5", and "still image M1" to "still image M6" indicate names of various still images. If the names are different, the contents thereof are different, and if the names are the same, the contents thereof are also the same. For example, since the "moving image B1" reproduced during the "step 1" (preheating step) when the "barista image" is selected and the "moving image F1" reproduced during the "step 1" (preheating step) when the "plantation image" is selected have different names, it indicates that they are moving images with different contents. Since the "still image P1" reproduced during the "step 6" (delivery to cup step) when the "product image" is selected and the "still image P1" reproduced during the "step 6" (delivery to cup step) when the "store image" is selected have the same name, it indicates that they are still images with the same content.

The image during production pattern 1 in (A) in Figure 19 is an example in which the "barista image", "plantation image", and "production step image" are registered as the plurality of images during production that can be selected by the user. For example, when the "barista image" is selected by the user, the "moving image B1" is reproduced if the beverage production step is the "step 1" (preheating step), and the "moving image B2" is reproduced if the beverage production step is the "step 2" (grinding step), and the "moving image B6" is reproduced if the beverage production step is the "step 6" (delivery to cup step).

The image during production pattern 2 in (B) in Figure 19 is an example in which the "product image", "store image", and "machine image" are registered as the plurality of images during production that can be selected by the user.

The image during production pattern 3 in (C) in Figure 19 is an example in which the "product image", "store image", and "history image" are registered as the plurality of images during production that can be selected by the user. Note that the "machine image" is in a state of being not able to be selected by the user. "YES" or "NO" of this "state" cannot be changed by user operation, but can be changed by administrator operation. Here, the administrator operation is, for example, an operation that can be changed on a management screen that is displayed when an administrator password or the like is entered. In this example, after entering the administrator password, the "state" field of each image during production can be changed, and when the "state" field of "machine image' is changed from "NO" to "YES", the user is be able to select from four images during production of "product image", "store image", "history image", and "machine image". Conversely, when the "state" field of the "product image" is changed from "YES" to "NO" by the administrator operation, the user cannot select the "product image" as an image during production.

To explain the example of each image during production in Figure 19, the "barista image" is an introduction video of a barista who creates a recipe that can be used in the beverage production device, and the "plantation image" is an introduction video of a production farm of coffee beans used in a recipe that can be used in the beverage production device, and the "production step image" is an introduction video of the six production steps (preheating, grinding, steaming, main hot water supply, stirring, and delivery to cup) of the beverage production device. These three images correspond to the items 1811 to 1813 in (B) in Figure 18 described above. The "product image" is a group of still images that introduce a recipe that can be used in the beverage production device, and the "store image" is a group of still images that introduces a store in which the beverage production device is installed, and the "machine image" is a group of still images introducing the beverage production device, and the "history image" is a group of moving images and still images introducing history of development of the beverage production device.

The image during production in the first row of the pattern during production in Figure 19 may be used as a default image during production. For example, in the case of the "image during production pattern 1" in (A) in Figure 19, when the user does not make a selection when power is turned on or when the device is recovered from an error, the "barista image" in the first row may be reproduced as the image during production. The default image during production may be settable by administrator operation. For example, it may be possible to change the row of the image during production pattern by administrator operation. For example, in the case of the "image during production pattern 1" in (A) in Figure 19, when the "barista image" on the first row and the "plantation image" on the second row are exchanged by administrator operation, the "plantation image" may be the default image during production.

The row of the image during production pattern may be replaced according to various information stored along with the use of the beverage production device. For example, in the case of the "image during production pattern 1" in (A) in Figure 19, when the user selects the "plantation image", the "barista image" on the first row and the "plantation image" on the second row in the image during production pattern are exchanged, so that the "plantation image" may be the default image during production, or which image during production is selected by the user from power-on of the beverage production device may be cumulatively stored, and the rows of the image during production pattern may be exchanged so that the image during production most frequently selected by the user becomes the default image during production. For example, when the "plantation image" is selected most often, the "barista image" in the first row and the "plantation image" in the second row in the image during production pattern are exchanged, and the "plantation image" may be the default image during production. At a plurality of beverage production devices in a store (for example, a plurality of beverage production devices installed in a store A, or a plurality of beverage production devices installed in either a store A or B) or at a location in a store (for example, a plurality of beverage production devices installed on the first floor of the store A), the most recently selected image during production or the most frequently selected image during production by the user may be the default image during production, or the most frequently selected image during production by a user may be a default image during production when that user performs a beverage production operation. Conversely, an image during production that is selected the least number of times by a user may also be the default image during production.

In the above examples, the default image during production is set, but these examples may be replaced with examples of setting the image during production to be displayed in a certain display region on the user selection screen (for example, the display region where the tab 1417 is displayed among the display regions where the tabs 1417 to 1420 in (B) in Figure 14 are displayed). For example, the example in which "the most frequently selected image during production by a user may be a default image during production when that user performs a beverage production operation" is described above, and may be replaced with an example in which "the image during production selected most frequently by one user may be set to be the image during production displayed in a certain display region (for example, the display region where the tab 1417 in (B) in Figure 14 is displayed) of a display region (for example, the display region where the tabs 1417 to 1420 in (B) in Figure 14 are displayed) of the selection screen of the image during production when the user performs the beverage production operation".

The image during production in the image during production pattern may be added externally (for example, from a server) through a signal line (for example, a LAN line such as the Internet). For example, as a new image during production from the server via the Internet by administrator operation, for example, a "new recipe image" (step 1: moving image N1, step 2: moving image N2, ..., step 6: still image N6) and data of each image (moving image N1, moving image N2, ..., still image N6) may be downloaded and added to the images during production that can be selected by the user. In this case, to make sure, the "state" field of the newly added image during production may be set to "NO", and the user may select the image during production only after the "state" is changed from "NO" to "YES" by administrator operation, or the "state" field may be set to "YES" from the beginning. Here, the example of downloading data from the server via the Internet is given, but the present invention is not limited to this, and it is possible to copy or move the image during production and image data stored in other devices such as another beverage production device.

Note that as shown in the image during production pattern, an example in which the image during production that can be selected by the user and image data are stored in the beverage production device and used is shown, but the image during production that can be selected by the user and image data may be stored externally (for example, in a server) and downloaded to the beverage production device via a signal line (for example, the Internet) or wireless communication each time a beverage is extracted or at power-on or each time an image is displayed for the user to choose.

In Figures 12 to 19, the configuration for displaying various data (image data and moving image data) during coffee beverage production is described. Here, in order to make more people to see specific data among the data displayed during the production of coffee beverage, a configuration for making such specific data easily to be displayed may be adopted. According to this configuration, the specific data can be used to deepen the understanding of the product and to convey the attractiveness of the product. Note that information for identifying the specific data referred to here may be set in advance in the database, or may be set by a person who operates the beverage production device 1 (for example, an administrator).

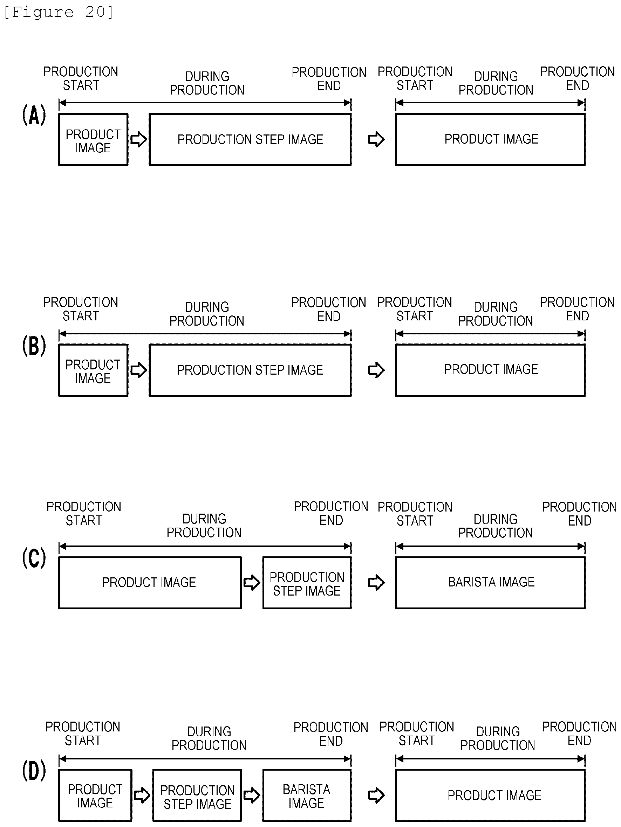

In order to make the specific data easier to be displayed, for example, it may be configured to increase the number of times of display or to increase the display time of the specific data compared with other data. In order to increase the number of times of display, for example, in the case of a configuration in which data to be displayed is selected by probability, the configuration may be such that a selection probability thereof is set higher than that of other data. For example, the specific data may also be displayed at a specific timing during the coffee beverage production, such as at the start of any one of the coffee beverage production steps. In Figure 20, (A) shows an example in which a "product image", which is the specific data, is displayed at the timing of start of the production of the coffee beverage. In this example, when producing the first coffee beverage, the "product image" displayed at the start of production is switched to the "production step image" by the user operation. In the subsequent production of the coffee beverage, the "product image" displayed at the start of the production is displayed as it is until the end of production.

Note that, a plurality of pieces of specific data set according to the type of the coffee beverage may be set as the specific data. In this case, the specific data may be displayed according to the coffee beverage to be produced. The specific data may also be displayed regardless of the type of coffee beverage, and in this case, one piece of data may be set as the specific data, or a plurality of pieces of data may be set.

When there is a plurality of pieces of the specific data, the specific data to be displayed during the production of the next coffee beverage may be determined according to the display time of the specific data during the production of the previous coffee beverage. In Figure 20, (B) and (C) show examples in which the "product image" and "barista image" are set as the specific data, respectively. If the display time of the specific data is more than half of the time required for production, the specific data is switched, and if it is less than half, the same specific data is displayed again. In (B) of Figure 20, as a result of switching the "product image" displayed at the start of the production of the first coffee beverage to the "production step image" by the user operation, the display time thereof is less than half of the time required for the production. In this case, the "product image" that is displayed at the start of production of the previous coffee beverage is displayed again for the production of the subsequent coffee beverage. On the other hand, in (C) in Figure 20, the "product image" displayed at the start of production of the first coffee beverage is switched to the "production step image" by user operation, but the display time is more than half of the time required for production. In this case, the "barista image", which is new specific data, is displayed in the production of the subsequent coffee beverage.

When there is a plurality of pieces of the specific data, the specific data to be displayed during the production of the next coffee beverage may be determined according to the display order of the specific data during the production of the previous coffee beverage. In Figure 20, (D) shows an example in which the "product image" and "barista image" are set as the specific data. In this example, two pieces of specific data are displayed with the "production step image" sandwiched therebetween during the production of the coffee beverage, and the "barista image" is displayed later between the two. In this case, the "product image", which is specific data different from the specific data displayed immediately before, is displayed during the production of the subsequent coffee beverage.

With reference to (B) to (D) in Figure 20, the configurations are described above in which the specific data to be displayed during the production of the subsequent coffee beverage is determined according to the display time or the display order of the specific data displayed during the production of the previous coffee beverage, but the present invention is not limited to these configurations, and when there are a plurality of pieces of the specific data, the specific data to be displayed during the production of the next coffee beverage may be determined according to the display situation of the specific data during the production of the previous coffee beverage.

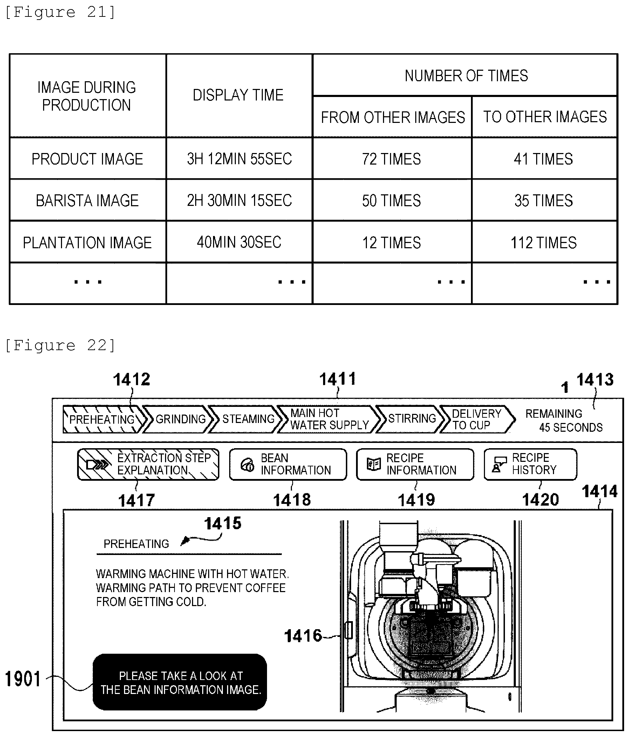

A total display time of the data of the image during production (image data or moving image data) displayed during the production of the coffee beverage may be stored. The number of times the data of the image during production is switched to other data during production (during display) may also be stored. The number of times the data of the image during production is switched from other data during production (during display) may also be stored. Figure 21 shows an example of these stored values. These values can be used as useful information in considering a sales strategy of the product.

Information regarding the data displayed during the coffee beverage production may be configured to be sent to an external device. With this configuration, it is possible to collect useful information in considering the sales strategy of the product.

In the configuration for making it easier to display the specific data out of the data displayed during the production of the coffee beverage, when this specific data is not displayed, a guidance display may be performed to guide the user to a state in which the specific data is displayed. Figure 22 shows an example of the guidance display when the photo image 1712 (see (B) in Figure 17) of a coffee bean plantation displayed by tapping the tab 1418 is set as the specific data. In this example, in addition to the state of (B) in Figure 14, a guidance display 1901 is shown to guide the user to display the photo image 1712 of the coffee bean plantation. By performing this guidance display 1901, it is possible to promote a state in which the specific data is displayed, deepen the understanding of the product, and convey the attractiveness of the product.

In the above example, the beverage production device 1 can be said to be a combination of a device for producing ground beans of coffee and a device for producing a coffee beverage from ground beans. The configuration regarding the display during operation described with reference to Figures 12 to 22 includes both operation to the device for producing ground beans and operation to the device for producing a coffee beverage from ground beans. Therefore, the configuration regarding the display during operation described with reference to Figures 12 to 22 is not limited to the configuration of the present embodiment, and may be applied to a device for producing ground beans of coffee (for example, pulverizing device 5) or a device for producing a coffee beverage from ground beans.

### <Summary of Embodiment>

The beverage production device in the above embodiment includes: a production unit for producing a beverage; a display unit (Figure 12) for displaying a moving image as an image during production when the moving image is selected from a plurality of images during production of the beverage by the production unit; and a selection unit (1417 to 1420) for selecting the image during production displayed by the display unit from the plurality of images including at least one of moving images and still images. With such a configuration, a moving image selected from a plurality of images can be displayed during the production of the coffee beverage.

The selection unit receives a selection of the image during production by a user when the image during production is being displayed by the display unit (S1303, S1308), and when the selection of the image during production made by the user with the selection unit is received, the display unit switches the image during production displayed before the selection is received to the received image during production in the selection (S1302, S1306). With such a configuration, even when the image during production is being displayed, it is possible to switch to the selected image during production and display it.

The display unit displays the image during production after the switching from a time point corresponding to a display elapsed time of the image during production before the switching. With such a configuration, it is possible to display the image during production after the switching from a time point corresponding to the display elapsed time of the image during production before the switching.

A sending unit (S1204) for sending a selection content of the image during production received from the selection unit to another beverage production device is further included. With such a configuration, it is possible to reflect the selection setting of the image during production to another beverage production device.

The image during production is an image (1411, 1501, 1511, 1601, 1611, 1701) explaining a production step of the beverage. The image during production is an image (1801) explaining a recipe creator of the beverage. The beverage is produced from coffee beans, and the image during production is an image (1710) explaining the coffee beans. With such a configuration, various information can be provided to the user by displaying the image during selection during the production of the coffee beverage.

The production unit produces a beverage through a plurality of production steps, and at least one moving image among the plurality of images includes a plurality of types of moving images, and when one production step in the plurality of production steps proceeds to the next production step, one moving image among the plurality of types of moving images is switched to the next moving image (Figure 19). With such a configuration, the moving images can be switched as the production step proceeds.

The above embodiment also describes:
a coffee beverage production device (for example, beverage production device 1), including: a display device (for example, information display device 12) capable of displaying data selected from a data group including at least one of moving image data and image data during production of a coffee beverage, in which
the data group includes first data (for example, specific data) and second data (for example, data other than the specific data), and
the first data is easier to be displayed than the second data (for example, Figure 20).

The coffee beverage production device according to the above, in which
the display device is capable of switching data being displayed to other data in the data group according to an operation by a user during the production of the coffee beverage (for example, (B) and (C) in Figure 20).

The coffee beverage production device according to the above, in which
the display device notifies for prompting to switch to the first data while displaying the second data (for example, guidance display 1901 in Figure 22).

The coffee beverage production device according to the above, in which
the display device switches from a state of displaying the first data to a state of displaying the second data during the production of the coffee beverage, and in a case where the display device displays the second data when the production of the coffee beverage is completed, the display device displays the first data at a start of production of the next coffee beverage (for example, (A) in Figure 20).

The coffee beverage production device according to the above, in which
one or more pieces of data in the data group can be set as the first data (for example, (B) to (D) in Figure 20).

The coffee beverage production device according to the above, in which
a display time of each piece of data in the data group is capable of being stored (for example, Figure 21).

The coffee beverage production device according to the above, in which
information on the data being displayed on the display device is sent to an external device.

The coffee beverage production device according to the above, in which
the data group includes data for explaining a production step of the coffee beverage (for example, (B) in Figure 14, (A) and (B) in Figure 15, (A) and (B) in Figure 16, and (A) in Figure 17).

The coffee beverage production device according to the above, in which
the data group includes data for explaining a creator of a recipe of the coffee beverage (for example, (A) in Figure 18) .

The coffee beverage production device according to the above, in which
the data group includes data for explaining coffee beans used in the coffee beverage (for example, (B) in Figure 17) .

The coffee beverage production device according to the above, in which
the display device is capable of switching data being displayed to other data in the data group according to a progress of a production step of the coffee beverage (for example, (B) in Figure 14, (A) and (B) in Figure 15, (A) and (B) in Figure 16, and (A) in Figure 17).

The above embodiment also describes:
a coffee beverage production system (Figure 10) including an external device (for example, the server 16 or the mobile terminal 17) capable of communicating with the coffee beverage production device.

The above embodiment also describes:
a data display method in a coffee beverage production device (for example, beverage production device 1) including a display device (for example, information display device 12), the method including:
a selection step of selecting data from a data group including at least one of moving image data and image data during production of a coffee beverage; and
a display step of displaying the data selected in the selection step on the display device, in which
the data group includes first data (for example, specific data) and second data (for example, data other than the specific data), and
the first data is easier to be selected than the second data (for example, Figure 20).

The data display method according to the above, in which
the selection step and the display step are performed according to user operation during production of a coffee beverage (for example, (B) and (C) in Figure 20).

The data display method according to the above, in which
the display step notifies to switch to the first data while displaying the second data (for example, guidance display 1901 in Figure 22).

The data display method according to the above, in which
a state of displaying the first data is switched to a state of displaying the second data during the production of the coffee beverage, and in a case where the second data is displayed when the production of the coffee beverage is completed, the first data is selected in the selection step at a start of production of the next coffee beverage (for example, (A) in Figure 20).

The data display method according to the above, in which
one or more pieces of data in the data group can be set as the first data (for example, (B) to (D) in Figure 20).

The data display method according to the above, further including:
a storage step of storing a display time of each piece of data in the data group (for example, Figure 21).

The data display method according to the above, further including:
a sending step of sending information on the data being displayed on the display device to an external device.

The data display method according to the above, in which
the data group includes data for explaining a production step of the coffee beverage (for example, (B) in Figure 14, (A) and (B) in Figure 15, (A) and (B) in Figure 16, and (A) in Figure 17).

The data display method according to the above, in which
the data group includes data for explaining a creator of a recipe of the coffee beverage (for example, (A) in Figure 18) .

The data display method according to the above, in which
the data group includes data for explaining coffee beans used in the coffee beverage (for example, (B) in Figure 17).

The data display method according to the above, in which
the selection step and the display step are performed according to progress of a production step of a coffee beverage (for example, (B) in Figure 14, (A) and (B) in Figure 15, (A) and (B) in Figure 16, and (A) in Figure 17).

The invention is not limited to the above-described embodiments, and various modifications and changes can be made within the scope of the gist of the invention.

### Reference Signs List

1 Beverage production device
9 Extraction container
11a Processing unit
11b Storage unit
12 Information display device
15 Communication network
17 Mobile termina
171 Reserve tank
72 Water tank
72f, 72h, 73c, 73b, 728 Electromagnetic valve

## Claims

1. A coffee beverage production device, comprising: a display device capable of displaying data selected from a data group including at least one of moving image data and image data during production of a coffee beverage, wherein
the data group includes first data and second data, and
the first data is easier to be displayed than the second data.

2. The coffee beverage production device according to claim 1, wherein
the display device is capable of switching data being displayed to other data in the data group according to an operation by a user during the production of the coffee beverage.

3. The coffee beverage production device according to claim 2, wherein
the display device notifies for prompting to switch to the first data while displaying the second data.

4. The coffee beverage production device according to any one of claims 1 to 3, wherein
the display device switches from a state of displaying the first data to a state of displaying the second data during the production of the coffee beverage, and in a case where the display device displays the second data when the production of the coffee beverage is completed, the display device displays the first data at a start of production of the next coffee beverage.

5. The coffee beverage production device according to any one of claims 1 to 4, wherein
one or more pieces of data in the data group can be set as the first data.

6. The coffee beverage production device according to any one of claims 1 to 5, wherein
a display time of each piece of data in the data group is capable of being stored.

7. The coffee beverage production device according to any one of claims 1 to 6, wherein
information on the data being displayed on the display device is sent to an external device.

8. The coffee beverage production device according to any one of claims 1 to 7, wherein
the data group includes data for explaining a production step of the coffee beverage.

9. The coffee beverage production device according to any one of claims 1 to 8, wherein
the data group includes data for explaining a creator of a recipe of the coffee beverage.

10. The coffee beverage production device according to any one of claims 1 to 9, wherein
the data group includes data for explaining coffee beans used in the coffee beverage.

11. The coffee beverage production device according to any one of claims 1 to 10, wherein
the display device is capable of switching data being displayed to other data in the data group according to a progress of a production step of the coffee beverage.
